# EUROPEAN PATENT APPLICATION

(11) **EP 4 848 816 A1**
(43) Date of publication of application: **02.12.2026**
(21) Application number: 24919335.0
(22) Date of filing: 25.01.2024
(51) Int. Cl.: H04W 36/08

(54) **INFORMATION TRANSMISSION METHOD AND DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Zimmermann, Tankred Klaus
(86) International application number: PCT/CN2024/074118
(87) International publication number: WO 2025/156226

(57) **Abstract**

The present disclosure provides an information transmission method and device, and a storage medium. The method comprises: sending a first message to a second node, wherein the first message comprises first information, and the first information is used for requesting layer 1/layer 2 triggered mobility (LTM). According to the present disclosure, an LTM interaction can be carried out between the nodes, so that an LTM configuration is supported, thereby improving the availability of LTM.

## Description

### TECHNICAL FIELD

The disclosure relates to the field of communication technologies, and in particular to an information transmission method, an apparatus, and a storage medium.

### BACKGROUND

A change of a serving cell is triggered by Layer 3 (L3) measurement and handover of a primary cell (PCell) and a primary secondary cell (PSCell) is handled via radio resource control (RRC) signaling. This handover approach requires reconfigurations of an upper layer, such as an RRC layer or a packet data convergence protocol (PDCP), and a lower layer, such as a medium access control (MAC) layer or a physical layer (PHY), which results in high overhead and long time-consumption for the handover.

Through a Layer 1/Layer 2 triggered mobility (L1/L2 triggered mobility, LTM), the configuration of the upper layer may be maintained during a cell handover procedure, which helps to reduce overhead and latency for the handover.

### SUMMARY

In order to optimize an inter-node signaling interaction process for an LTM, embodiments of the present disclosure provide an information transmission method and an apparatus, and a storage medium.

According to a first aspect of embodiments of the disclosure, an information transmission method is provided. The method is performed by a first node, and includes: sending a first message to a second node, in which the first message includes first information, and the first information is configured to request an LTM.

According to a second aspect of embodiments of the disclosure, an information transmission method is provided. The method is performed by a second node, and includes: receiving a first message sent by a first node, in which the first message includes first information, and the first information is configured to request an LTM.

According to a third aspect of embodiments of the disclosure, an information transmission method is provided. The method is performed by a third node, and includes: sending a first message to a first node to cause the first node to send the first message to a second node, in which the first message includes first information, and the first information is configured to request an LTM.

According to a fourth aspect of embodiments of the disclosure, a first node is provided. The first node includes: a transceiver module, configured to send a first message to a second node, in which the first message includes first information, and the first information is configured to request an LTM.

According to a fifth aspect of embodiments of the disclosure, a second node is provided. The second node includes: a transceiver module, configured to receive a first message sent by a first node, in which the first message includes first information, and the first information is configured to request an LTM.

According to a sixth aspect of embodiments of the disclosure, a third node is provided. The third node includes: a transceiver module, configured to send a first message to a first node to cause the first node to send the first message to a second node, in which the first message includes first information, and the first information is configured to request an LTM.

According to a seventh aspect of embodiments of the disclosure, a first node is provided. The first node includes: one or more processors, in which the one or more processors is configured to implement the information transmission method as described in any one of the first aspect.

According to an eighth aspect of embodiments of the disclosure, a second node is provided. The second node includes: one or more processors, in which the one or more processors is configured to implement the information transmission method as described in any one of the second aspect.

According to a ninth aspect of embodiments of the disclosure, a third node is provided. The third node includes: one or more processors, in which the one or more processors is configured to implement the information transmission method as described in any one of the third aspect.

According to a tenth aspect of embodiments of the disclosure, a communication system is provided. The communication system includes: a first node, a second node and a third node, in which the first node is configured to implement the information transmission method as described in any one of the first aspect, the second node is configured to implement the information transmission method as described in any one of the second aspect, and the third node is configured to implement the information transmission method as described in any one of the third aspect.

According to an eleventh aspect of embodiments of the disclosure, a storage medium is provided. The storage medium stores instructions that, when executed by a communication device, cause the communication device to perform the information transmission method as described in any one of the first aspect, the second aspect or the third aspect.

In the embodiments of the present disclosure, the first node may send the first message to the second node, the first message includes the first information, and the first information may be configured to request the LTM, which may perform inter-node interaction for LTM, support LTM configuration, and improve LTM availability.

It is noted that the above general description and the following detailed description are merely illustrative and explanatory, which do not constitute a limitation on embodiments of the present disclosure.

### BRIEF DESCRIPTION OF THE DRAWINGS

The accompanying drawings, which are incorporated in and constitute a part of the description, illustrate embodiments consistent with the present disclosure and serve to explain the principles of embodiments of the present disclosure together with the description.
FIG. 1A is a schematic diagram illustrating an architecture example of a communication system according to an embodiment of the disclosure.
FIG. 1B is a schematic diagram illustrating an example of an NR-DC architecture according to an embodiment of the disclosure.
FIG. 1C is a schematic diagram illustrating an example of a dual connectivity architecture according to an embodiment of the disclosure.
FIG. 1D is a schematic diagram illustrating an interaction example of an LTM cell handover procedure according to an embodiment of the disclosure.
FIG. 1E is a schematic diagram illustrating an interaction example of an SN-initiated SCG LTM procedure without MN involvement (SRB3 is used) according to an embodiment of the disclosure.
FIG. 1F is a schematic diagram illustrating an interaction example of an SN-initiated SCG LTM procedure without MN involvement (SRB3 is not used) according to an embodiment of the disclosure.
FIG. 2 is a schematic diagram illustrating an interaction example of an information transmission method according to an embodiment of the disclosure.
FIG. 3A is a schematic diagram illustrating an interaction example of an information transmission method according to an embodiment of the disclosure.
FIG. 3B is a schematic diagram illustrating an interaction example of an information transmission method according to an embodiment of the disclosure.
FIG. 3C is a schematic diagram illustrating an interaction example of an information transmission method according to an embodiment of the disclosure.
FIG. 4A is a schematic diagram illustrating an interaction example of an information transmission method according to an embodiment of the disclosure.
FIG. 4B is a schematic diagram illustrating an interaction example of an information transmission method according to an embodiment of the disclosure.
FIG. 4C is a schematic diagram illustrating an interaction example of an information transmission method according to an embodiment of the disclosure.
FIG. 4D is a schematic diagram illustrating an interaction example of an information transmission method according to an embodiment of the disclosure.
FIG. 5A is a block diagram illustrating an example of a first node according to an embodiment of the disclosure.
FIG. 5B is a block diagram illustrating an example of a second node according to an embodiment of the disclosure.
FIG. 5C is a block diagram illustrating an example of a third node according to an embodiment of the disclosure.
FIG. 6A is a schematic diagram illustrating an interaction example of a communication device according to an embodiment of the disclosure.
FIG. 6B is a schematic diagram illustrating an interaction example of a chip according to an embodiment of the disclosure.

### DETAILED DESCRIPTION

The illustrative embodiments will be described in detail here, and examples thereof are shown in the accompanying drawings. When the following descriptions refer to the accompanying drawings, same numbers in different drawings represent same or similar elements unless otherwise indicated. The implementations described in the following illustrative embodiments do not represent all implementations consistent with the present disclosure. Rather, they are merely examples of apparatuses and methods consistent with some aspects of the disclosure as detailed in the appended claims.

Embodiments of the present disclosure provide an information transmission method and an apparatus, and a storage medium.

In a first aspect, embodiments of the disclosure provide an information transmission method. The method is performed by a first node, and includes: sending a first message to a second node, in which the first message includes first information, and the first information is configured to request a Layer 1 or Layer 2 triggered mobility (LTM).

In the above embodiment, the first node may send the first message to the second node, the first message includes the first information, and the first information may be configured to request the LTM, which may perform inter-node interaction for LTM, support LTM configuration, and improve LTM availability.

In combination with some embodiments of the first aspect, in some embodiments, the first information includes at least one of: an LTM candidate cell identifier; an LTM candidate configuration identifier; or LTM indication information, in which the LTM indication information is used to request an LTM candidate configuration or an LTM candidate configuration update; first indication information, the first indication information indicates that the second node is allowed to prepare a Layer 3 mobility configuration for a terminal in a case where the second node does not support configuring an LTM candidate cell; a maximum number of configurable candidate cells; a recommended candidate cell list; an LTM candidate cell identifier list; or an LTM candidate configuration identifier list.

In the above embodiment, the first information may include, but is not limited to, at least one of the above items, which may achieve the purpose of requesting inter-node LTM and has high availability.

In combination with some embodiments of the first aspect, in some embodiments, the first message includes any one of: a handover request message; a secondary node (SN) addition request message; an SN modification request message; an SN change request message; a first Xn message, in which the first Xn message is configured to request the LTM; or a first inter-node radio resource control (RRC) message, in which the first inter-node RRC message is configured to request the LTM.

In the above embodiment, the first information may be sent to the second node by reusing an existing message or using a newly defined message, which has a minor change to a protocol and high availability.

In combination with some embodiments of the first aspect, in some embodiments, the method further includes: receiving a second message sent by the second node, in which the second message includes at least one of: an LTM candidate configuration; or a Layer 3 mobility configuration.

In the above embodiment, the first node may receive the second message returned by the second node, so as to acquire the LTM candidate configuration and/or the Layer 3 mobility configuration, which is compatible with the existing Layer 3 mobility configuration acquisition procedure and has high availability.

In combination with some embodiments of the first aspect, in some embodiments, the second message includes any one of: a handover request acknowledge message; an SN addition request acknowledge message; an SN modification request acknowledge message; an SN change request acknowledge message; a second Xn message, in which the second Xn message is configured to confirm a request of the LTM; or a second inter-node RRC message, in which the second inter-node RRC message is configured to confirm a request of the LTM.

In the above embodiment, the second message may reuse an existing message or use a newly defined message for LTM, which is simple to implement and has high availability.

In combination with some embodiments of the first aspect, in some embodiments, the method further includes: receiving a third message sent by the second node, in which the third message is configured to notify the first node that LTM execution is successfully completed.

In the above embodiment, the first node may determine that the LTM execution is successfully completed based on the third message sent by the second node, ensuring that the network side has a consistent understanding of the LTM execution and high availability.

In combination with some embodiments of the first aspect, in some embodiments, in a case where the third message includes LTM indication information, the third message indicates a change of a serving node of a terminal is triggered by the LTM.

In the above embodiment, if the third message received by the first node includes the LTM indication information, the third message may indicate that the change of the service node of the terminal is triggered by the LTM, which is simple to implement and has high availability.

In combination with some embodiments of the first aspect, in some embodiments, the third message includes any one of: a handover success message; an SN addition success message; an SN modification success message; an SN change success message; a third Xn message, in which the third Xn message indicates that LTM execution is successfully completed; or a third inter-node RRC message, in which the third inter-node RRC message indicates that LTM execution is successfully completed.

In the above embodiment, the third message may reuse an existing Xn message or may be a new message agreed upon by a protocol, and has high availability.

In combination with some embodiments of the first aspect, in some embodiments, the method further includes: sending a fourth message to the second node, in which the fourth message is configured to cancel an LTM candidate configuration prepared by the second node for a terminal.

In the above embodiment, the first node may initiate the LTM cancellation procedure to achieve the purpose of canceling the inter-node LTM candidate configuration.

In combination with some embodiments of the first aspect, in some embodiments, the fourth message includes at least one of: an LTM candidate cell identifier; an LTM candidate configuration identifier; an LTM candidate cell identifier list; or an LTM candidate configuration identifier list.

In the above embodiment, the fourth message may include, but is not limited to, at least one of the above items. The first node may use the first message to inform the second node of a candidate cell and a candidate configuration identifier corresponding to the candidate configuration that is expected to be cancelled, so that the second node may cancel the corresponding LTM candidate configuration, which has high availability.

In combination with some embodiments of the first aspect, in some embodiments, the method further includes: receiving a fifth message sent by the second node after the second node prepares an LTM candidate configuration for a terminal, in which the fifth message is configured to cancel the LTM candidate configuration prepared by the second node for the terminal.

In the above embodiment, the second node may also actively initiate cancellation after preparing the LTM candidate configuration for the terminal, and inform the first node through the fifth message, achieving the purpose of canceling the inter-node LTM candidate configuration.

In combination with some embodiments of the first aspect, in some embodiments, the fifth message includes at least one of: an LTM candidate cell identifier; an LTM candidate configuration identifier; an LTM candidate cell identifier list; or an LTM candidate configuration identifier list.

In the above embodiment, the fifth message may include, but is not limited to, at least one of the above items. The second node may use the fifth message to inform the first node of a candidate cell and a candidate configuration identifier corresponding to the canceled candidate configuration, which is simple to implement and has high availability.

In combination with some embodiments of the first aspect, in some embodiments, the method further includes: sending a sixth message to the second node, in which the sixth message is configured to request to modify an LTM candidate configuration prepared by the second node for a terminal.

In the above embodiment, the first node may initiate the LTM modification procedure, achieving the purpose of modifying the inter-node LTM candidate configuration, and having high availability.

In combination with some embodiments of the first aspect, in some embodiments, the sixth message includes at least one of: LTM indication information; an LTM candidate cell identifier; an LTM candidate configuration identifier; an LTM candidate cell identifier list; or an LTM candidate configuration identifier list.

In the above embodiment, the sixth message may include, but is not limited to, at least one of the above items, which may synchronize the cancelled LTM candidate configuration between nodes, having high availability.

In combination with some embodiments of the first aspect, in some embodiments, the method further includes: receiving a seventh message sent by the second node, in which the seventh message is configured to request the first node to initiate modification of an LTM candidate configuration.

In the above embodiment, the second node may request the first node to initiate the LTM modification procedure through the seventh message, achieving the purpose of modifying the inter-node LTM candidate configuration.

In combination with some embodiments of the first aspect, in some embodiments, the seventh message includes at least one of: LTM indication information; an LTM candidate cell identifier; an LTM candidate configuration identifier; an LTM candidate cell identifier list; or an LTM candidate configuration identifier list.

In the above embodiment, the seventh message may include, but is not limited to, at least one of the above items, which may synchronize the LTM candidate configuration requested to be canceled by the second node between nodes, and have high availability.

In combination with some embodiments of the first aspect, in some embodiments, the method further includes: sending an eighth message to a third node after receiving the third message sent by the second node, in which the third message indicates that the terminal successfully accesses the second node, and the eighth message is configured to release a resource of the third node.

In the above embodiment, the first node may send the eighth message to the third node after the terminal successfully accesses the second node, which may inform the third node of releasing the resource, and avoid resource waste caused by continuing to occupy the resource of the third node.

In combination with some embodiments of the first aspect, in some embodiments, the method further includes: receiving the first message sent by a third node.

In the above embodiment, the third node may send the first message to the first node, and the first node may send the first message to the second node, achieving the purpose of LTM interaction between nodes in an SN triggered SCG LTM procedure in a dual connectivity scenario.

In combination with some embodiments of the first aspect, in some embodiments, the method further includes: sending a ninth message to a third node after receiving a second message sent by the second node, in which the second message includes an LTM candidate configuration, and the ninth message includes at least one of: an identifier of the second node that prepares the LTM candidate configuration for a terminal; a secondary cell group (SCG) LTM candidate cell identifier; or an SCG LTM candidate cell configuration identifier.

In the above embodiment, during an SN triggered SCG LTM procedure in a dual connectivity scenario, relevant information of the SCG LTM candidate configuration prepared by the second node may be provided to the SN, which may improve availability of the LTM in the dual connectivity scenario.

According to a second aspect of embodiments of the disclosure, an information transmission method is provided. The method is performed by a second node, and includes: receiving a first message sent by a first node, in which the first message includes first information, and the first information is configured to request an LTM.

In the above embodiment, the second node may receive the first message sent by the first node, and the first message may be used to request the LTM, which may perform inter-node interaction for LTM, support LTM configuration, and improve LTM availability.

In combination with some embodiments of the second aspect, in some embodiments, the first information includes at least one of: an LTM candidate cell identifier; an LTM candidate configuration identifier; LTM indication information, in which the LTM indication information is used to request an LTM candidate configuration or an LTM candidate configuration update; first indication information, in which the first indication information indicates that the second node is allowed to prepare a Layer 3 mobility configuration for a terminal in a case where the second node does not support configuring an LTM candidate cell; a maximum number of configurable candidate cells; a recommended candidate cell list; an LTM candidate cell identifier list; or an LTM candidate configuration identifier list.

In combination with some embodiments of the second aspect, in some embodiments, the first message includes any one of: a handover request message; a secondary node (SN) addition request message; an SN modification request message; an SN change request message; a first Xn message, in which the first Xn message is configured to request the LTM; or a first inter-node radio resource control (RRC) message, in which the first inter-node RRC message is configured to request the LTM.

In combination with some embodiments of the second aspect, in some embodiments, the method further includes: preparing an LTM candidate configuration for a terminal based on the first message.

In combination with some embodiments of the second aspect, in some embodiments, the method further includes: preparing for a terminal a Layer 3 mobility configuration corresponding to an LTM candidate cell, in a case where an LTM candidate configuration cannot be prepared for the terminal, and the first message includes second indication information, in which the second indication information is configured to request the Layer 3 mobility configuration; or preparing for a terminal a Layer 3 mobility configuration corresponding to an LTM candidate cell, in a case where an LTM candidate configuration cannot be prepared for the terminal, and the first message includes first indication information, in which the first indication information indicates that the second node is allowed to prepare a Layer 3 mobility configuration for a terminal in a case where the second node does not support configuring an LTM candidate cell.

In combination with some embodiments of the second aspect, in some embodiments, the method further includes any one of: preparing an LTM candidate configuration for a terminal, and, in a case where an LTM candidate configuration cannot be prepared for the terminal, preparing a Layer 3 mobility configuration for the terminal, in which the first message includes first indication information and second indication information, the first indication information indicates that the second node is allowed to prepare the Layer 3 mobility configuration for the terminal in a case where the second node does not support configuring an LTM candidate cell, and the second indication information is configured to request the Layer 3 mobility configuration; or preparing an LTM candidate configuration and/or a Layer 3 mobility configuration for a terminal, in which the first message includes first indication information and second indication information, the first indication information indicates that the second node is allowed to prepare the Layer 3 mobility configuration for the terminal in a case where the second node does not support configuring an LTM candidate cell, and the second indication information is configured to request the Layer 3 mobility configuration.

In combination with some embodiments of the second aspect, in some embodiments, the method further includes: sending a second message to the first node, in which the second message includes at least one of: the LTM candidate configuration; or a Layer 3 mobility configuration.

In combination with some embodiments of the second aspect, in some embodiments, the second message includes any one of: a handover request acknowledge message; an SN addition request acknowledge message; an SN modification request acknowledge message; an SN change request acknowledge message; a second Xn message, in which the second Xn message is configured to confirm a request of the LTM; or a second inter-node RRC message, in which the second inter-node RRC message is configured to confirm a request of the LTM.

In combination with some embodiments of the second aspect, in some embodiments, the method further includes: sending a third message to the first node, in which the third message is configured to notify the first node that LTM execution is successfully completed.

In combination with some embodiments of the second aspect, in some embodiments, in a case where the third message includes LTM indication information, the third message indicates a change of a serving node of a terminal is triggered by the LTM.

In combination with some embodiments of the second aspect, in some embodiments, the third message includes any one of: a handover success message; an SN addition success message; an SN modification success message; an SN change success message; a third Xn message, in which the third Xn message indicates that LTM execution is successfully completed; or a third inter-node RRC message, in which the third inter-node RRC message indicates that LTM execution is successfully completed.

In combination with some embodiments of the second aspect, in some embodiments, the method further includes: receiving a fourth message sent by the first node, in which the fourth message is configured to cancel an LTM candidate configuration prepared by the second node for a terminal; and cancelling the LTM candidate configuration prepared for the terminal based on the fourth message.

In combination with some embodiments of the second aspect, in some embodiments, the fourth message includes at least one of: an LTM candidate cell identifier; an LTM candidate configuration identifier; an LTM candidate cell identifier list; or an LTM candidate configuration identifier list.

In combination with some embodiments of the second aspect, in some embodiments, the method further includes: sending a fifth message to the first node after preparing the LTM candidate configuration for the terminal, in which the fifth message is configured to cancel the LTM candidate configuration prepared by the second node for the terminal.

In combination with some embodiments of the second aspect, in some embodiments, the fifth message includes at least one of: an LTM candidate cell identifier; an LTM candidate configuration identifier; an LTM candidate cell identifier list; or an LTM candidate configuration identifier list.

In combination with some embodiments of the second aspect, in some embodiments, the method further includes: receiving a sixth message sent by the first node, in which the sixth message is configured to request to modify an LTM candidate configuration prepared by the second node for a terminal; and modifying the LTM candidate configuration prepared for the terminal based on the sixth message.

In combination with some embodiments of the second aspect, in some embodiments, the sixth message includes at least one of: LTM indication information; an LTM candidate cell identifier; an LTM candidate configuration identifier; an LTM candidate cell identifier list; or an LTM candidate configuration identifier list.

In combination with some embodiments of the second aspect, in some embodiments, the method further includes: sending a seventh message the first node, in which the seventh message is configured to request the first node to initiate modification of an LTM candidate configuration.

In combination with some embodiments of the second aspect, in some embodiments, the seventh message includes at least one of: LTM indication information; an LTM candidate cell identifier; an LTM candidate configuration identifier; an LTM candidate cell identifier list; or an LTM candidate configuration identifier list.

According to a third aspect of embodiments of the disclosure, an information transmission method is provided. The method is performed by a third node, and includes: sending a first message to a first node to cause the first node to send the first message to a second node, in which the first message includes first information, and the first information is configured to request an LTM.

In the above embodiment, in an SN triggered SCG LTM procedure in a dual connectivity scenario, inter-node interaction for LTM may be performed, and LTM availability may be improved.

In combination with some embodiments of the third aspect, in some embodiments, the first information includes at least one of: an LTM candidate cell identifier; an LTM candidate configuration identifier; or LTM indication information, in which the LTM indication information is used to request an LTM candidate configuration or an LTM candidate configuration update; first indication information, in which the first indication information indicates that the second node is allowed to prepare a Layer 3 mobility configuration for a terminal in a case where the second node does not support configuring an LTM candidate cell; a maximum number of configurable candidate cells; a recommended candidate cell list; an LTM candidate cell identifier list; or an LTM candidate configuration identifier list.

In combination with some embodiments of the third aspect, in some embodiments, the first message includes any one of: a handover request message; a secondary node (SN) addition request message; an SN modification request message; an SN change request message; a first Xn message, in which the first Xn message is configured to request the LTM; or a first inter-node radio resource control (RRC) message, in which the first inter-node RRC message is configured to request the LTM.

In combination with some embodiments of the third aspect, in some embodiments, the method further includes: receiving an eighth message sent by the first node, in which the eighth message is configured to release a resource of the third node; and releasing the resource based on the eighth message.

In combination with some embodiments of the third aspect, in some embodiments, the method further includes: receiving a ninth message sent by the first node, in which the ninth message includes at least one of: an identifier of the second node that prepares the LTM candidate configuration for a terminal; a secondary cell group (SCG) LTM candidate cell identifier; or an SCG LTM candidate cell configuration identifier.

In a fourth aspect, embodiments of the disclosure provide a first node. The first node includes: a transceiver module, configured to send a first message to a second node, in which the first message includes first information, and the first information is configured to request an LTM.

In a fifth aspect, embodiments of the disclosure provide a second node. The second node includes: a transceiver module, configured to receive a first message sent by a first node, in which the first message includes first information, and the first information is configured to request an LTM.

In a sixth aspect, embodiments of the disclosure provide a third node. The third node includes: a transceiver module, configured to send a first message to a first node to cause the first node to send the first message to a second node, in which the first message includes first information, and the first information is configured to request an LTM.

In a seventh aspect, embodiments of the disclosure provide a first node. The first node includes: one or more processors, in which the one or more processors is configured to implement the information transmission method as described in any one of the first aspect.

In an eighth aspect, embodiments of the disclosure provide a second node. The second node includes: one or more processors, in which the one or more processors is configured to implement the information transmission method as described in any one of the second aspect.

In a ninth aspect, embodiments of the disclosure provide a third node. The third node includes: one or more processors, in which the one or more processors is configured to implement the information transmission method as described in any one of the third aspect.

In a tenth aspect, embodiments of the disclosure provide a communication system. The communication system includes: a first node, a second node and a third node, in which the first node is configured to implement the information transmission method as described in any one of the first aspect, the second node is configured to implement the information transmission method as described in any one of the second aspect, and the third node is configured to implement the information transmission method as described in any one of the third aspect.

In an eleventh aspect, embodiments of the disclosure provide a storage medium. The storage medium stores instructions that, when executed by a communication device, cause the communication device to perform the information transmission method as described in any one of the first aspect, the second aspect or the third aspect.

It may be understood that the first node, the second node, the third node, the communication system, the storage medium, and the computer program are all used to implement the method provided in embodiments of the disclosure. Thus, regarding beneficial effects they may achieve, reference may made be to the beneficial effects in the corresponding methods, which may not be repeated herein.

Embodiments of the disclosure provide an information transmission method, an apparatus, and a storage medium. In some embodiments, terms such as "information transmission method", "information processing method", and "communication method" may be used interchangeably, terms such as "information transmission apparatus", "information processing apparatus" and "communication apparatus" may be used interchangeably, and terms such as "information processing system" and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one selected from A and B for execution (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one selected from A and B for execution (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity, or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the apparatus and the device may be interpreted as physical or virtual, and their names are not limited to the names recorded in embodiments. In some cases, the apparatus and the device may also be understood as "equipment", "device", "circuit", "network element", "node", "function", "unit", "section", "system", "network", "chip", "chip system", "entity", and "subject".

In some embodiments, the term such as "network" may be interpreted as an apparatus (e.g., an access network device, a core network device, etc.) included in the network.

In some embodiments, "access network device (AN device)" may be referred to as "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "BWP" and the like.

In some embodiments, acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

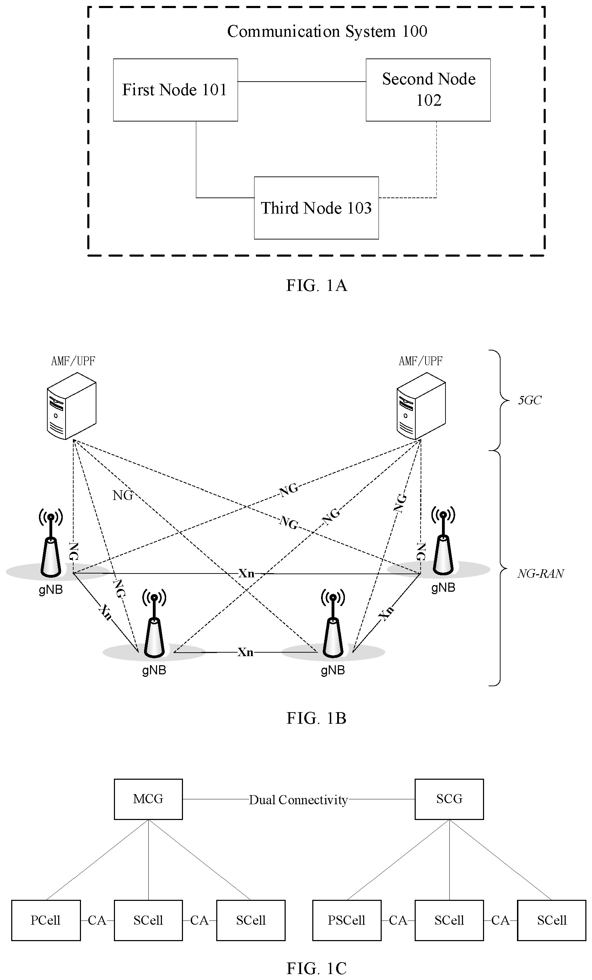

FIG. 1A is a schematic diagram illustrating an architecture of a communication system according to an embodiment of the disclosure.

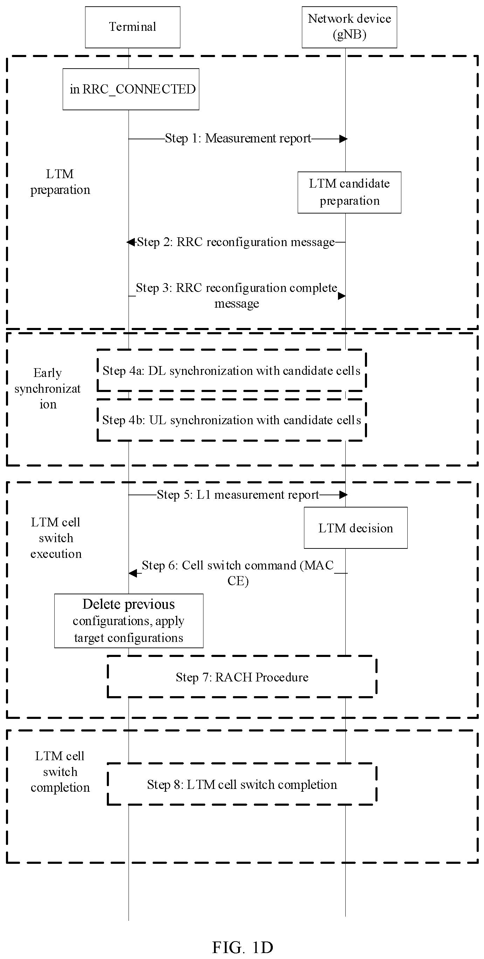

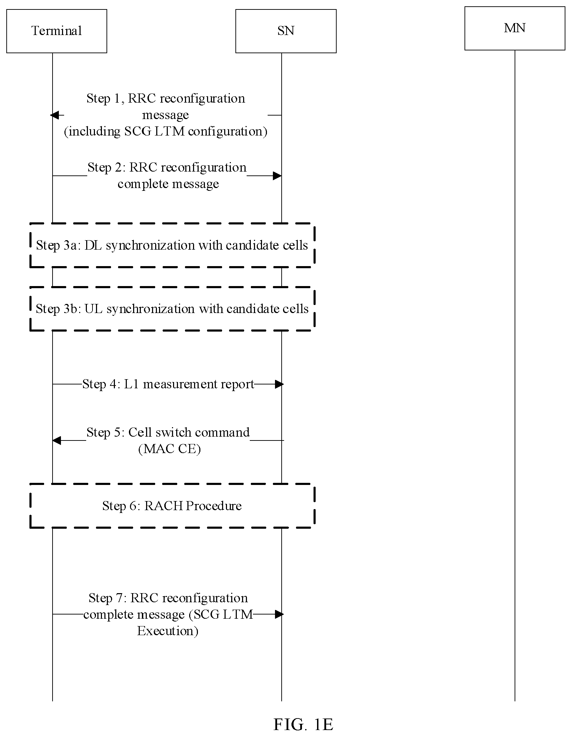

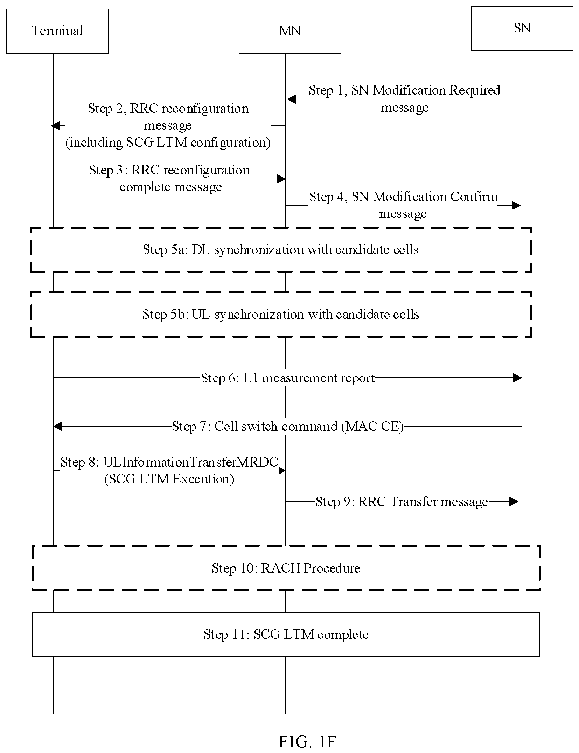

As shown in FIG. 1, the communication system 100 may include a first node 101, a second node 102 and a third node 103.

In some embodiments, in a non-dual connectivity (non-DC) scenario, the first node 101 may be a source access network device, such as a source base station.

In some embodiments, in a dual connectivity (DC) scenario, the first node 101 may be a master node (MN).

In some embodiments, in a non-DC scenario, the second node 102 may be a candidate access network device, such as a candidate base station.

In some embodiments, in a DC scenario, the second node 102 may be a candidate-secondary node (C-SN).

In some embodiments, the system may include one or more second nodes 102, which is not limited in the disclosure.

In some embodiments, the third node 103 may be a source-secondary node (S-SN) in a DC scenario.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited herein.

In some embodiments, the communication system 100 may also include a core network device (not shown in FIG. 1A). The core network device may be one device, or may be a plurality of devices or a group of devices. The network device may be virtual or physical. The core network may include, for example, at least one of an evolved packet core (EPC), a 5G core network (5GCN), or a next generation core (NGC).

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the terminal is connected to the core network device via the access network device.

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects other than those shown in FIG. 1A. The number and form of the subjects are arbitrary. The subjects may be physical or virtual. The connection relationship between the subjects is an example. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-wideband (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

Terminology and technical scenarios involved in the present disclosure are introduced before introducing the solutions provided by the present disclosure.
1. Multi-Rate Dual Connectivity (MR-DC).
   MR-DC is a generalized Intra-Evolved Universal Terrestrial Radio Access (Intra-E-UTRA) dual connectivity in which a terminal may utilize radio resources provided by two different schedulers located on two different Next Generation Radio Access Network (NG-RAN) nodes. The two nodes are connected via a non-ideal backhaul, one of the nodes provides NR access and the other node provides E-UTRA or NR access. One node is an MN and the other node is an SN. The MN and the SN are connected via a network interface, with at least the MN connected to a core network.
2. NR-NR Dual Connectivity

NG-RAN supports NR-NR DC (NR-DC), in which a terminal is connected to a gNB acting as the MN and another gNB acting as the SN. The primary gNB connects to the 5GC via an NG interface, and the two gNBs are connected via an Xn interface. The secondary gNB may also connect to the 5GC via an NG-U interface. The NR-DC may also be used for a UE to access a single gNB which is acted as both the MN and the SN, configured with both a Main Cell Group (MCG) and a Secondary Cell group (SCG). The architecture of NR-DC is shown in FIG. 1B.

In dual connectivity, as shown in FIG. 1C, the terminal may access two cell groups, namely the MCG and the SCG. In the MCG, there may be many cells, one of which is a cell used to initiate initial access, and this cell is called as a Primary Cell (PCell). As the name suggests, the PCell is the most "primary" cell in the MCG. The PCell in the MCG and a Secondary Cell (SCell) in the MCG are combined through carrier aggregation (CA). In the MCG, the primary cell is the PCell, and the secondary cell is the SCell. In the SCG, a primary and secondary cell is a Primary Secondary Cell (PSCell), and the secondary cell is the SCell. Since many signalings are only sent on the PCell and PSCell, for convenience of description, a concept special cell (sPCell) is defined, where PCell and PSCell are collectively referred to as sPCell.

### 3. Layer 1 or Layer 2-triggered mobility (LTM)

LTM refers to a process of PCell and/or PSCell cell switch triggered by the network through a medium-access-control control element (MAC CE) based on L1 or L2 measurement results, which may be accompanied by changes in MCG and/or SCG.

In the LTM, an access network device receives an L1 measurement report from a terminal. The access network device changes, based on this report, a serving cell of the terminal via a cell switch command issued by the MAC CE. The cell switch command indicates an LTM candidate cell configuration that the access network device previously provides to the terminal via radio resource control (RRC) signaling. The terminal accesses, based on the received cell switch command, a target cell indicated in the cell switch command. The LTM may be used to reduce mobility latency.

The LTM candidate cell configuration may only be added, modified, and released by the network through the RRC signaling. The LTM procedure may be used to reduce mobility delays.

For the LTM, subsequent LTM is supported. The subsequent LTM refers to subsequent LTM cell switch procedures between candidate cells without RRC reconfiguration by the network in between. In other words, after performing a mobility operation, the terminal does not autonomously delete LTM configuration information. The LTM configuration information may continue to be used to trigger subsequent LTM even without RRC reconfiguration and update.

LTM supports the following scenarios:
LTM supports both intra-gNB-DU and intra-gNB-CU inter-gNB-DU mobility. The LTM supports both intra-frequency and inter-frequency mobility, including mobility to inter-frequency cell that is not a current serving cell. The following scenarios are supported:
- PCell change in non-CA scenario and non-DC scenario;
- PCell change in CA scenario;
- Dual connectivity scenario, MCG PCell change and SCG PSCell change without MN involvement (i.e., intra-SN PSCell change). LTM for simultaneous PCell and PSCell change is not supported.

In some embodiments, only intra-DU LTM and inter-DU intra-CU LTM are supported, but this may be expanded to support inter-CU (or inter-node/gNB) LTM subsequently. Inter-CU (inter-node/gNB ) LTM for SCG PSCell change may involve the MN. The MN may coordinate configurations between candidate PSCells in different CUs.

### 4. LTM configuration:

The LTM configures LTM configuration information using LTM-Config.

The LTM configuration information may include, but is not limited to, one or more of:
An LTM reference configuration;
one or more candidate cell configurations (using Itm-CandidateToReleaseList or ltm-CandidateToAddModList to add, modify, or delete the candidate cell configurations); or
an LTM channel state information (CSI) resource configuration.

The candidate cell configuration may be configured through LTM-Candidate, which includes, but is not limited to, one or more of:
a candidate configuration identifier;
a candidate cell identifier; or
a candidate configuration (represented by RRCReconfiguration).

For example, a candidate configuration may also be referred to as an LTM candidate configuration. The LTM candidate configuration is a configuration part of an RRCReconfiguration message associated with a candidate cell, e.g., a configuration part of for LTM or subsequent conditional Pscell addition/change (CPAC). The candidate configuration may be a complete candidate configuration or a delta configuration relatively to a reference configuration.

For example, the reference configuration may also be referred to as an LTM reference configuration. The LTM reference configuration is a configuration provided by the network to the terminal that is common, within the same cell group, to a group of configured non-complete candidate configurations. That is, for the MCG or SCG, the LTM reference configuration is the common portion of the non-complete LTM candidate configurations. The non-complete LTM candidate configuration may be combined with the LTM reference configuration to obtain a complete LTM candidate configuration.

The non-complete LTM candidate configuration may also be called as a delta configuration. In other words, when the LTM candidate configuration is the delta configuration. For MCG LTMs, delta candidate configurations corresponding to all candidate cells of all MCG LTMs correspond to the same reference configuration. Based on the reference configuration and the delta configurations of the candidate cells, the complete configuration corresponding to all of the candidate cells of the MCG LTMs may be generated. For SCG LTM, delta candidate configurations corresponding to all candidate cells of all SCG LTMs correspond to the same reference configuration. Based on the reference configuration and the delta configurations of the candidate cells, a complete configuration corresponding to all of the candidate cells of the SCG LTMs may be generated.

### 5. LTM execution procedure:

An overall procedure for LTM is shown in FIG. 1D below. Subsequent LTM is done by repeating the early synchronization, LTM cell switch execution, and LTM cell switch completion steps without releasing other LTM candidate configurations after each LTM cell switch completion. A general procedure over an air interface is applicable to SCG LTM.

The procedure for LTM includes the following steps.

Step 1, a terminal sends a MeasurementReport message to an access network device (e.g., gNB). The gNB decides to configure LTM and initiates LTM preparation.

Step 2, the gNB transmits to the terminal an RRCReconfiguration message including LTM candidate configurations.

Step 3, the terminal stores the LTM candidate configurations and transmits an RRCReconfigurationComplete message to the gNB.

Step 4a, the terminal performs DownLink (DL) synchronization with candidate cell(s) before receiving a cell switch command.

Step 4b. the terminal performs UpLink (UL) synchronization with candidate cell(s) before receiving a cell switch command.

When the network side is configured with timed advance (TA) measurement, the terminal acquires a TA value(s) of the candidate cell(s) by measurement. The terminal performs early TA acquisition with the candidate cell(s) as requested by the network before receiving the cell switch command, following which the terminal sends preamble towards a candidate cell indicated by the network side.

The terminal doesn't maintain a TA timer for the candidate cell and relies on network implementation to guarantee TA validity.

Step 5, the terminal performs L1 measurements on the configured candidate cell(s) and transmits L1 measurement reports to the gNB. L1 measurement is performed as long as RRC reconfiguration (step 2) is applicable.

Step 6, the gNB decides to execute cell switch to a target cell and transmits a MAC CE triggering cell switch by including a candidate configuration index of the target cell. The terminal switches to the target cell and applies a configuration indicated by the candidate configuration index.

Step 7, the terminal performs a random access procedure towards the target cell, if the terminal does not have valid TA of the target cell.

Step 8, the terminal completes the LTM cell switch procedure by sending RRCReconfigurationComplete message to the target cell.

If the terminal has performed a RA procedure in step 7, the terminal considers that LTM cell switch execution is successfully completed when the random access procedure is successfully completed. For RACH-less LTM, the terminal considers that the LTM cell switch execution is successfully completed when the terminal determines that the network has successfully received its first UL data.

The steps 4-8 may be performed multiple times for subsequent LTM using the LTM candidate configuration(s) provided in step 2.

The procedure over the air interface described in FIG. 1D is applicable to both intra-gNB-DU LTM and inter-gNB-DU LTM.

### 6. SCG LTM.

For example, a procedure of SN initiated SCG LTM without MN involvement (Signaling Radio Bearer3 (SRB3) is used) is shown in FIG. 1E.

The SN initiates this procedure when an SN needs to transfer an NR RRC message to a terminal and the SRB3 is used to configure intra-SN SCG LTM. The procedure includes the following steps.

Step 1, the SN sends SN RRCReconfiguration including SCG LTM configuration to the terminal through the SRB3.

Step 2, the terminal stores SCG LTM candidate cell configurations and transmits an RRCReconfigurationComplete message to the SN.

Step 3a, if indicated by the SN, the terminal performs DL synchronization candidate cell(s) before receiving a cell switch command.

Step 3b, if indicated by the SN, the terminal performs early TA acquisition with candidate cell(s) before receiving a cell switch command.

Step 4, the terminal performs L1 measurements on configured candidate cell(s) and transmits L1 measurement reports to the SN, according to the L1 measurement configuration in RRCReconfiguration received in step 1. The terminal starts to perform L1 measurements once the L1 measurement configuration is applicable.

Step 5, the SN decides to execute cell switch to a target cell and transmits a MAC CE triggering cell switch by including a candidate configuration index of the target cell. The terminal switches to the target cell and applies a configuration indicated by the candidate configuration index.

Step 6, the terminal performs a random access procedure towards the target cell, if the terminal does not have valid TA of the target cell.

Step 7, the terminal completes the SCG LTM cell switch procedure by sending RRCReconfigurationComplete message to target cell.

If the terminal has performed a RA procedure in step 6, the terminal considers that LTM execution is successfully completed when the random access procedure is successfully completed. For RACH-less LTM, the terminal considers that LTM execution is successfully completed when the UE determines that the target cell has successfully received its first UL data.

The steps 3-7 may be performed multiple times for subsequent SCG LTM using the SCG LTM candidate configuration(s) provided in step 1.

For example, a procedure of SN initiated SCG LTM without MN involvement (Signaling Radio Bearer3 (SRB3) is not used) is shown in FIG. 1F.

The SN initiates this procedure when an SN needs to transfer an NR RRC message to a terminal and the SRB3 is not used to configure intra-SN SCG LTM. The procedure includes the following steps.

Step 1, the SN initiates the procedure by sending to an MN SN Modification Required including the a RRCReconfiguration message with SCG LTM configuration.

Step 2, the MN forwards the SN RRCReconfiguration message to the UE including SN RRCReconfiguration message in the RRCReconfiguration message.

Step 3, the terminal replies with a RRCReconfigurationComplete message by including a SN RRCReconfigurationComplete message.

Step 4, the MN forwards the SN RRC response message, if received from the terminal, to the SN by including the SN RRC response message in a SN Modification Confirm message.

Step 5a, if indicated by the SN, the terminal performs DL synchronization with candidate cell(s) before receiving a cell switch command.

Step 5b, if indicated by the SN, the terminal performs early TA acquisition with candidate cell(s) before receiving a cell switch command.

Step 6, the terminal performs L1 measurements on configured candidate cell(s) and transmits L1 measurement reports to the SN, according to the L1 measurement configuration in RRCReconfiguration received in step 2. The terminal starts to perform L1 measurements once the L1 measurement configuration is applicable.

Step 7., the SN decides to execute cell switch to a target cell and transmits a MAC CE triggering cell switch by including a candidate configuration index of the target cell. The terminal switches to the target cell and applies a configuration indicated by the candidate configuration index.

Step 8, the terminal sends an ULInformationTransferMRDC message to the MN, the message includes an embedded RRCReconfigurationComplete message to the target cell.

Step 9, the RRCReconfigurationComplete message is forwarded to the SN embedded in RRC Transfer message.

Step 10, the terminal performs a random access procedure towards the target cell, if the terminal does not have a valid TA of the target cell.

Step 11, the terminal completes the SCG LTM cell switch procedure by sending an UL transmission to the target cell.

If the terminal has performed a RA procedure in step 10 the terminal considers that LTM execution is successfully completed when the random access procedure is successfully completed. For RACH-less LTM, the terminal considers that the LTM execution is successfully completed when the terminal determines that the SN has successfully received its first UL data.

The steps 5-11 may be performed multiple times for subsequent SCG LTM using the SCG LTM candidate configuration(s) provided in step 2.

Currently, LTM only supports intra-DU LTM and inter-DU intra-CU LTM. Support for the following research scenarios may be expanded in the future:
inter-CU (or inter-node) LTM;
conditional LTM (the terminal triggers the LTM based on conditions configured by the network).

For inter-CU LTM in non-DC scenario, such as MCG LTM.

For inter-CU LTM in NR-DC scenario, the following mobility scenarios need to be discussed:
Scenario 1, LTM for MCG change with SN release
Scenario 2: LTM for PSCell/SCG change with MN involvement
   Scenario 2.1, MN initiated SCG LTM
   Scenario 2.2, SN initiated SCG LTM
Scenario 3, LTM for MCG with/without SCG change.

The terminal may apply configurations of both the MCG and the SCG when executing LTM, and one LTM candidate configuration may include configurations of both candidate PCell and candidate PSCell.

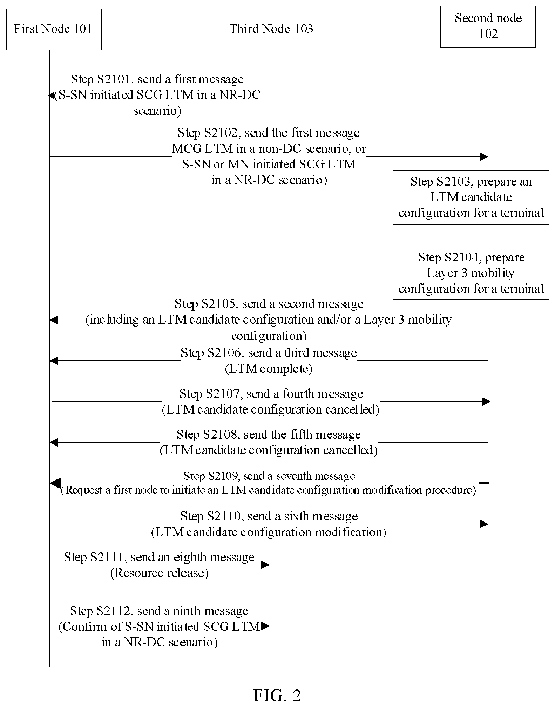

Since LTM does not involve interaction between nodes, in order to support LTM configuration, the present disclosure provides the following information transmission method, apparatus, and storage medium, which may perform inter-node interaction for LTM, support LTM configuration, and improve LTM availability. FIG. 2 is a schematic diagram illustrating an interaction of an information transmission method according to an embodiment of the disclosure.

As shown in FIG. 2, embodiments of the present disclosure relate to an information transmission method, and the method includes the following steps.

Step S2101, a third node 103 sends a first message to a first node 101.

In some embodiments, the third node 103 may be a source secondary node (S-SN) in a dual connectivity (DC) scenario.

In some embodiments, in a DC scenario, the first node 101 may be a MN.

In some embodiments, the first message includes first information, and the first information is configured to request an LTM. The specific content of the first message and the first information will be introduced in the subsequent step S2102 and is not introduced here.

In some embodiments, in a DC scenario, for SN triggered SCG LTM with MN involvement, the third node 103 may send the first message to the first node 101 to start the SCG LTM. In this case, the first message may be an SN Change Required message.

In some embodiments, in a non-DC scenario, or in a DC scenario with MN triggered SCG LTM with MN involvement, step S2101 may not be performed.

Step S2102, the first node 101 sends the first message to a second node 102.

In some embodiments, in a non-DC scenario, the first node 101 may be a source access network device, and the second node 102 may be a candidate access network device. In the embodiments of the present disclosure, the access network device may be a gNB, or may be replaced by an NG-RAN node, a 6G network node, or a future network node.

In some embodiments, in a DC scenario, the first node 101 may be a MN, and the second node 102 may be a candidate secondary node (C-SN).

In some embodiments, the first message includes first information, and the first information is configured to request an LTM.

In some embodiments, the first information may include, but is not limited to, at least one of: an LTM candidate cell identifier; an LTM candidate configuration identifier; or LTM indication information, in which the LTM indication information is used to request an LTM candidate configuration or an LTM candidate configuration update; first indication information, the first indication information indicates that the second node is allowed to prepare a Layer 3 mobility configuration for a terminal in a case where the second node does not support configuring an LTM candidate cell; a maximum number of configurable candidate cells; a recommended candidate cell list; an LTM candidate cell identifier list; or an LTM candidate configuration identifier list.

The LTM candidate cell may also be referred to as a candidate cell, which refers to a candidate serving cell of a terminal in LTM.

The LTM indication information may be configured to request an LTM candidate configuration, or may be configured to request replacement, update, deletion, etc. of the LTM candidate configuration, which is not limited in the present disclosure.

The name of the LTM indication information is not limited and may be interchanged with indication information, LTM request indication information, etc.

The name of the first indication information is not limited and may be interchangeable with fallback indication information.

The configurable candidate cells may include, but are not limited to, configurable primary secondary cells (PSCells).

The recommended candidate cell list may include one or more LTM candidate cells recommended by the first node 101.

The LTM candidate cell identifier list may include one or more LTM candidate cell identifiers.

The LTM candidate configuration identifier list may include one or more LTM candidate configuration identifiers.

In some embodiments, the first message may be any of:
a handover request message;
an SN addition request message;
an SN modification request message;
an SN change request message;
a first Xn message, in which the first Xn message is configured to request the LTM; or
a first inter-node RRC message, in which the first inter-node RRC message is configured to request the LTM.

In an example, the inter-node RRC message may be a message transmitted between nodes on the network side, which may be carried in an Xn message.

In an example, the handover request message may be sent by a source access network device to a candidate access network device, and a new information element (IE) may be added to the handover request message, such as LTM Information Setup, which includes LTM indication information (LTM Indicator), LTM configuration identifier (LTM Configuration ID), indication information for conditional handover, etc., as shown in Table 1.

**Table 1**

| IE Name | Presence | Range | IE type and reference | Semantics description | Criticality | Assigned Criticality |
|---|---|---|---|---|---|---|
| Target Cell Global ID | M | | ...... | Includes either an E-UTRA CGI or an NR CGI | YES | reject |
| ...... | | | | | | |
| LTM Information Setup | | 0..1 | | | YES | reject |
| >LTM Indicator | M | | ENUMERATED (true, ...) | | - | |
| >LTM Configuration ID | M (or Option) | | INTEGER (1...x), where x is the maximum number of LTMs that can be configured for a terminal, usually 8 | Corresponds to the LTM-CandidateId IE | - | |
| >indication information for conditional handover | O | | ENUMERATED (true, ...) | | - | |

In an example, the SN Addition Request message may be sent by the MN to the C-SN, and a new IE may be added to the SN Addition Request, such as the SCG LTM Information Setup, which includes LTM indication information (LTM Indicator), the maximum number of configurable primary and secondary cells (PSCells), indication information for CPAC, etc., as shown in Table 2.

**Table 2**

| IE Name | Presence | Range | IE type and reference | Semantics description | Criticality | Assigned Criticality |
|---|---|---|---|---|---|---|
| SCG LTM Information Setup | | 0..1 | | | YES | reject |
| >LTM Indicator | M | | ENUMERATED (true, ...) | | - | |
| > Maximum Number of PSCells | O | | INTEGER (1......8......) | Indicates the maximum number of PSCells that the target SN may prepare | - | |
| >indication information for CPAC | O | | ENUMERATED (true, ...) | | - | |

In an example, the SN Addition Request message may be sent from the MN to the C-SN. A new IE, such as SCG LTM Request Information, may be added to the SN Addition Request, as shown in Table 3.

**Table 3**

| IE Name | Presence | Range | IE type and reference | Semantics description | Criticality | Assigned Criticality |
|---|---|---|---|---|---|---|
| SCG LTM Request Information | O | 0..1 | ...... | Indicates that SN addition is for S-CPAC preparation | YES | reject |

In an example, the SN Modification Request message may be sent from the MN to the C-SN, and a new IE may be added to the SN Modification Request, such as SCG LTM Addition Information Modification Request, which includes the maximum number of configurable primary secondary cells (PSCells), an estimated arrival probability, SCG LTM request information, SCG LTM inter-SN execution notification, etc., as shown in Table 4.

**Table 4**

| IE Name | Presence | Range | IE type and reference | Semantics description | Criticality | Assigned Criticality |
|---|---|---|---|---|---|---|
| SCG LTM Addition Information Modification Request | O | | | This IE may be sent to the target SN. | YES | ignore |
| >Maximum Number of PSCells | O | | INTEGER (1...8, ...) | Indicates the maximum number of PSCells that the target SN may prepare. | - | |
| >Estimated Arrival Probability | O | | INTEGER (1...100) | Indicates the arrival probability for the UE towards the candidate target SN. | - | |
| >SCG LTM Request Information | O | | ... | Indicates that SN modification is for SCG LTM preparation or modification. | YES | reject |
| >SCG LTM Inter-SN Execution Notification | O | | ENUMERATED (true, ...) | Indicates that inter-SN SCG LTM was executed. | YES | reject |

In an example, the SN change request (SN ChangeRequired) message may be sent by the MN to the C-SN, and a new IE may be added to the SN change request, such as the SCG LTM information request (SCG LTM Information Required), which includes a multi-target SN node list. The multi-target SN node list may include multi-target SN node items. Further, the multi-target SN node items may include a target SN node identifier, SCG LTM indication information, a maximum number of configurable primary secondary cells (PSCells), an estimated arrival probability, an SN node to SN node container, etc., as shown in Table 5.

**Table 5**

| IE Name | Presence | Range | IE type and reference | Semantics description | Criticality | Assigned Criticality |
|---|---|---|---|---|---|---|
| SCG LTM Information Required | O | | | | YES | ignore |
| > multi-target SN node list | | 1 | | | - | |
| >>multi-target SN node item | | 1...Maximum number of SN | | | - | |
| >>> target SN node identifier | M | | Global NG-RAN Node ID | | - | |
| >>>SCG LTM Indicator | M | | ENUMERATED (SCG LTM-initiation, SCG LTM-modification, SCG LTM-cancellation, ...) | | - | |
| >>>Maximum Number of PSCells To Prepare | M | | INTEGER (1...8, ...) | Indicates the maximum number of PSCells that the target SN may prepare. | - | |
| >>>Estimated Arrival Probability | O | | INTEGER (1...100) | Indicates the arrival probability for the UE towards the candidate target SN. | - | |
| >>>SN node to MN node Container | M | | OCTET STRING | Includes the *CG-Config* message | | |

In an example, the first Xn message may be an Xn message newly defined in a protocol for requesting the LTM.

In an example, the first inter-node RRC message may be carried in an Xn message and sent to the second node 102.

The first inter-node RRC message may be cell group configuration information (CG-ConfigInfo), and a new message may be introduced in CG-ConfigInfo. For example, an MN candidate cell information list (ltmcandidateCellInfoListMN) includes one or more recommended candidate LTM cells, which may be represented by the latest L3 or L1 measurement results. That is, the CG-ConfigInfo includes the one or more recommended candidate LTM cells and includes the corresponding L1 or L3 measurement results. The following is an example:

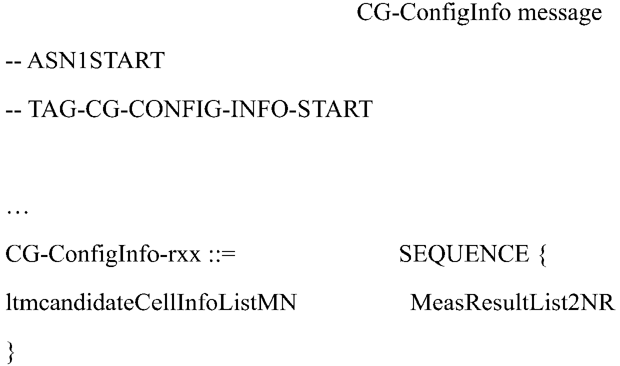

It should be noted that some other information included in CG-ConfigInfo is not related to the present disclosure and is therefore not reflected in the above example.

The master eNB or gNB uses, for example, a CG-ConfigInfo message to request a SgNB or a SeNB to perform certain actions, e.g. to establish, modify or release an SCG. This message may include additional information, such as to assist the SgNB or the SeNB set an SCG configuration. A CU may also use the CG-ConfigInfo message to request a DU to perform certain actions, e.g. to establish, or modify the MCG or the SCG. A direction of the CG-ConfigInfo message may be from master eNB or gNB to candidate gNB or eNB, or from CU to DU.

The above description is merely an illustrative description, and the present disclosure does not limit the message type of the first message.

In some embodiments, the second node 102 receives the first message.

Step S2103, the second node 102 prepares an LTM candidate configuration for the terminal.

In some embodiments, the second node 102 prepares the LTM candidate configuration for the terminal based on the first message.

In some embodiments, the second node 102 generates the LTM candidate configuration for the terminal based on the first information.

In some embodiments, the LTM candidate configuration is a configuration part of an RRC reconfiguration message associated with a candidate cell, for example, for LTM or subsequent CPAC. The candidate configuration may be a complete candidate configuration or a delta configuration relatively to a reference configuration.

In some embodiments, the present disclosure does not limit the method for configuring the LTM candidate configuration by the second node.

Step S2104, the second node 102 prepares for the terminal a Layer 3 mobility configuration corresponding to an LTM candidate cell.

In some embodiments, if the second node 102 is unable to prepare or generate the LTM candidate configuration for the terminal, and the first message includes second indication information, i.e., the first message requests both LTM and Layer 3 mobility configuration, the second node 102 may prepare or generate for the terminal the Layer 3 mobility configuration corresponding to the LTM candidate cell. The second indication information is configured to request the Layer 3 mobility configuration.

In some embodiments, the second node 102 is unable to prepare or generate the LTM candidate configuration for the terminal, and the first message includes first indication information, that is, when the second node 102 is allowed to fall back, the second node 102 prepares or generates for the terminal the Layer 3 mobility configuration corresponding to the LTM candidate cell. The first indication allows the second node to prepare or generate the Layer 3 mobility configuration for the terminal in a case where the second node does not support configuring the LTM candidate cell.

In some embodiments, the first message includes both first indication information and second indication information. The second node 102 may preferably first perform step S2102 to prepare or generate the LTM candidate configuration for the terminal, and in a case where the second node 102 is unable to be prepare the LTM candidate configuration for the terminal, perform step S2103 to prepare or generate the Layer 3 mobility configuration for the terminal. The first indication information indicates that the second node is allowed to prepare or generate the Layer 3 mobility configuration for the terminal in a case where the second node does not support configuring the LTM candidate cell, and the second indication information is configured to request the Layer 3 mobility configuration.

In some embodiments, the first message includes the first indication information and the second indication information, and the second node 102 may execute step S2103 or step S2104 based on its own decision, that is, prepare or generate the LTM candidate configuration or the Layer 3 mobility configuration for the terminal.

In some embodiments, the first message includes the first indication information and the second indication information, and the second node 102 may execute step S2103 and step S2104, i.e., prepare or generate both the LTM candidate configuration and the Layer 3 mobility configuration for the terminal.

The above description is merely an example, and the present disclosure does not limit whether step S2103 and step S2104 are executed, and the order in which they are executed.

In some embodiments, the present disclosure does not limit the method of configuring the Layer 3 mobility configuration by the second node.

Step S2105, the second node 102 sends a second message to the first node 101.

In some embodiments, the second message may include, but is not limited to, at least one of:
an LTM candidate configuration; or
a Layer 3 mobility configuration.

In some embodiments, the second message may include any one of:
a handover request acknowledge message;
an SN addition request acknowledge message;
an SN modification request acknowledge message;
an SN change request acknowledge message;
a second Xn message, in which the second Xn message is configured to confirm a request of the LTM; or
a second inter-node RRC message, wherein the second inter-node RRC message is configured to confirm a request of the LTM.

In some embodiments, the second message may include LTM indication information. The LTM indication information indicates that the second node has prepared or generated the LTM candidate configuration for the terminal.

In some embodiments, the second message may include Layer 3 mobility indication information. The Layer 3 mobility indication information indicates that the second node has prepared or generated the Layer 3 mobility configuration for the terminal.

The above is merely an illustrative description. The second message may also include other information, which is not limited in this disclosure.

In some embodiments, the first node 101 receives the second message. The second message may include the LTM candidate configuration and/or the Layer 3 mobility configuration prepared or generated by the second node 102 for the terminal.

Step S2106, the second node 102 sends a third message to the first node 101.

In some embodiments, the second node 102 may send the third message to the first node 101 after the LTM is completed.

In some embodiments, the first node 101 receives the third message.

In some embodiments, the third message is configured to notify the first node101 that LTM execution is successfully completed

In some embodiments, in a case where the third message includes LTM indication information, the third message indicates a change of a serving node of a terminal is triggered by the LTM.

In some embodiments, the third message may include any one of:
a handover success message;
an SN addition success message;
an SN modification success message;
an SN change success message;
a third Xn message, in which the third Xn message indicates that LTM execution is successfully completed; or
a third inter-node RRC message, in which the third inter-node RRC message indicates that LTM execution is successfully completed.

In an example, the third message is a handover success message, to which the LTM indication information may be added, as shown in Table 6, for example.

**Table 6**

| IE Name | Presence | Range | IE type and reference | Semantics description | Criticality | Assigned Criticality |
|---|---|---|---|---|---|---|
| LTM Indicator | O | | ENUMERATED (true, ...) | | YES | reject |
| ...... | | | | | | |

The above description is merely an illustrative description, and the present disclosure does not limit the type of the third message and the solution of the LTM indication information added to the third message.

Step S2107, the first node 101 sends a fourth message to the second node 102.

In some embodiments, the fourth message is configured to cancel an LTM candidate configuration prepared by the second node 102 for a terminal.

In some embodiments, the fourth message may include, but is not limited to, at least one of:
an LTM candidate cell identifier;
an LTM candidate configuration identifier;
an LTM candidate cell identifier list;
an LTM candidate configuration identifier list; or
LTM all cancellation instruction information.

In some embodiments, the fourth message may carry the LTM all cancellation indication information, and the LTM all cancellation indication information is configured to indicate cancellation of all of LTM candidate configurations prepared or generated by the second node 102 for the terminal.

In some embodiments, the fourth message may include LTM partial cancellation indication information, which may indicate cancellation of a part of the LTM candidate configurations prepared or generated by the second node 102 for the terminal. The second node 102 may determine an LTM candidate configuration to be cancelled based on a predefined method, such as a protocol agreement, or the second node 102 may determine an LTM candidate configuration to be cancelled based on at least one of the LTM candidate cell identifier, the LTM candidate configuration identifier, the LTM candidate cell identifier list, or the LTM candidate configuration identifier list included in the fourth message.

In some embodiments, the fourth message may include any of:
a Handover Cancel message;
a fourth Xn message, configure to cancel the LTM candidate configuration; or
a fourth inter-node RRC message, configure to cancel the LTM candidate configuration.

In an example, the fourth message is the Handover Cancel message, to which a candidate cell for LTM to be cancelled list may be added, as shown in Table 7, for example.

**Table 7**

| IE/Name | Presence | Range | IE type and reference | Semantics description | Criticality | Assigned Criticality |
|---|---|---|---|---|---|---|
| Candidate Cells To Be Cancelled List | | | 0...Maximum number of candidate cells | | YES | reject |
| > Target Cell ID | M | | Target Cell ID | | - | |
| Candidate Cells for LTM To Be Cancelled List | | | 0...Maximum number of LTM candidate cells | | YES | reject |
| > Target Cell ID | M | | Target Cell ID | | - | - |

The above description is merely an example, and all solutions in which the first node 101 cancels the LTM candidate configuration prepared by the second node 102 for the terminal through the fourth message should fall within the protection scope of the present disclosure.

In some embodiments, the second node 102 receives the fourth message.

In some embodiments, the second node 102 cancels the LTM candidate configuration prepared for the terminal based on the fourth message.

In an example, the fourth message includes the LTM candidate cell identifier, and the second node 102 may cancel the LTM candidate configuration corresponding to an LTM candidate cell indicated by the fourth message.

In an example, the fourth message includes the LTM candidate configuration identifier, and the second node 102 may cancel the LTM candidate configuration indicated by the fourth message.

In an example, the fourth message includes the LTM candidate cell identifier list, and the second node 102 may cancel the LTM candidate configuration corresponding to each of LTM candidate cells in the LTM candidate cell identifier list.

In an example, the fourth message includes the LTM candidate configuration identifier list, and the second node 102 may cancel each of LTM candidate configurations in the LTM candidate configuration identifier list.

In an example, the fourth message includes the LTM candidate cell identifier and the LTM candidate configuration identifier, and the second node 102 cancels LTM candidate configurations corresponding to the LTM candidate cell identifier and the LTM candidate configuration identifier indicated by the fourth message.

In an example, the fourth message includes the LTM candidate cell identifier list and the LTM candidate configuration identifier list. The second node 102 cancels LTM candidate configurations corresponding to each of the LTM candidate cells in the LTM candidate cell identifier list and each of the LTM candidate configuration identifiers in the LTM candidate configuration identifier list.

The above description is merely an example, and all solutions in which the second node 102 cancels the LTM candidate configuration based on the fourth message should fall within the protection scope of the present disclosure.

Step S2108, a fifth message sent by the second node 102 after the second node 102 prepares the LTM candidate configuration for the terminal is received.

In some embodiments, the fifth message is configured to cancel the LTM candidate configuration prepared by the second node 102 for the terminal.

In some embodiments, the second node 102 may also proactively cancel the LTM candidate configuration.

In some embodiments, the fifth message may include, but is not limited to, at least one of:
an LTM candidate cell identifier;
an LTM candidate configuration identifier;
an LTM candidate cell identifier list; or
an LTM candidate configuration identifier list.
LTM all cancellation indication information.

In some embodiments, the fifth message may carry the LTM all cancellation indication information, and the LTM all cancellation indication information indicates cancellation of all of LTM candidate configurations prepared by the second node 102 for the terminal.

In some embodiments, the fifth message may include LTM partial cancellation indication information, which may indicate cancellation of a part of the LTM candidate configurations prepared by the second node 102 for the terminal. The first node 101 may determine an LTM candidate configuration to be cancelled based on a predefined method, such as a protocol agreement. Or, the first node 101 determines an LTM candidate configuration to be cancelled based on at least one of the LTM candidate cell identifier, the LTM candidate configuration identifier, the LTM candidate cell identifier list, or the LTM candidate configuration identifier list included in the fifth message.

In some embodiments, the fifth message may include any of
a Conditional Handover Cancel message;
a fifth Xn message, configured to cancel conditional handover of the LTM candidate configuration; or
a fifth inter-node RRC message, configured to cancel conditional handover of the LTM candidate configuration.

In an example, the fifth message is the Conditional Handover Cancel message, to which a candidate cell for LTM to be cancelled list may be added, as shown in Table 8, for example.

**Table 8**

| IE/Name | Presence | Range | IE type and reference | Semantics description | Criticality | Assigned Criticality |
|---|---|---|---|---|---|---|
| Candidate Cells To Be Cancelled List | | | 0...Maximum number of candidate cells | | YES | reject |
| > Target Cell ID | M | | Target Cell ID | | - | |
| Candidate Cells | | | 0...Maximum | | YES | reject |
| for LTM To Be Cancelled List | | | number of LTM candidate cells | | | |
| > Target Cell ID | M | | Target Cell ID | | - | - |

The above description is merely an example, and solutions in which the second node 102 notifies the first node 101 through the fifth message that the second node 102 cancels the LTM candidate configuration prepared for the terminal should all fall within the protection scope of the present disclosure.

In some embodiments, the solution in which the second node 102 cancels the LTM candidate configuration is similar to the solution in which the second node 102 cancels the LTM candidate configuration based on the fourth message, and is not described again here.

Step S2109, the second node 102 sends a seventh message to the first node 101.

In some embodiments, the seventh message may be configured to request the first node 101 to initiate modification of an LTM candidate configuration.

In some embodiments, after receiving the seventh message, the first node 101 sends the sixth message to the second node. For a specific implementation process refer to the subsequent step S2109, which is not described here.

In some embodiments, the second node 102 may request the first node 101 to initiate the modification of the LTM candidate configuration.

In some embodiments, the seventh message may include, but is not limited to, at least one of:
LTM indication information;
an LTM candidate cell identifier;
an LTM candidate configuration identifier;
an LTM candidate cell identifier list; or
an LTM candidate configuration identifier list.

In some embodiments, the seventh message may include any of:
an SN Modification Required message;
a seventh Xn message configured to request to initiate the modification of the LTM candidate configuration; or
a seventh inter-node RRC message configured to request to initiate the modification of the LTM candidate configuration.

In an example, the seventh message includes the LTM indication information, and the second node 102 may modify one or more LTM candidate configurations prepared by itself for the terminal based on the LTM indication information.

In an example, the seventh message includes the LTM candidate cell identifier, and the second node 102 may modify an LTM candidate configuration corresponding to an LTM candidate cell indicated by the LTM candidate cell identifier.

In an example, the seventh message includes the LTM candidate configuration identifier, and the second node 102 may modify an LTM candidate configuration corresponding to the LTM candidate configuration identifier.

In an example, the seventh message includes the LTM candidate cell identifier list, and the second node 102 may modify an LTM candidate configuration corresponding to each of LTM candidate cells in the LTM candidate cell identifier list.

In an example, the seventh message includes the LTM candidate configuration identifier list, and the second node 102 may modify each of LTM candidate configurations included in the LTM candidate configuration identifier list.

In an example, the seventh message includes the LTM indication information and the LTM candidate cell identifier, and the second node 102 may modify an LTM candidate configuration corresponding to the LTM candidate cell indicated by the LTM candidate cell identifier.

In an example, the seventh message includes the LTM indication information and the LTM candidate configuration identifier, and the second node 102 may modify an LTM candidate configuration corresponding to the LTM candidate configuration identifier.

In an example, the seventh message includes the LTM indication information, the LTM candidate cell identifier, and the LTM candidate configuration identifier. The second node 102 may modify LTM candidate configurations corresponding to the LTM candidate cell identifier and the LTM candidate configuration identifier.

In an example, the seventh message includes the LTM candidate cell identifier list and the LTM candidate configuration identifier list, the second node 102 modifies LTM candidate configurations corresponding to each of LTM candidate cell identifiers (from the LTM candidate cell identifier list) and each of LTM candidate configuration identifiers (from the LTM candidate configuration identifier list).

The above description is merely an example, and solutions in which the second node 102 modifies the LTM candidate configuration based on the seventh message should all fall within the protection scope of the present disclosure.

Step S2110, the first node 101 sends a sixth message to the second node 102.

In some embodiments, the sixth message may be configured to request to modify an LTM candidate configuration prepared by the second node 102 for the terminal

In some embodiments, the first node 101 may proactively initiate modification of the LTM candidate configuration, in which case the above step S2109 may not be performed.

In some embodiments, the first node 101 may initiate the modification of the LTM candidate configuration based on a request from the second node 102, and step S2109 may be executed in this case.

In some embodiments, the sixth message may include, but is not limited to, at least one of:
LTM indication information;
an LTM candidate cell identifier;
an LTM candidate configuration identifier;
an LTM candidate cell identifier list; or
an LTM candidate configuration identifier list.

In some embodiments, the sixth message may include any of:
an SN Modification Request message;
a sixth Xn message configured for modification of the LTM candidate configuration; or
a sixth inter-node RRC message configured for modification of the LTM candidate configuration.

In an example, the sixth message is the SN modification request message, to which an SCG LTM additional information modification request may be added. Further, the message may include the maximum number of configurable primary and secondary cells (PSCells), an estimated arrival probability, SCG LTM request information, SCG LTM inter-SN execution notification, etc., as shown in Table 9.

**Table 9**

| IE Name | Presence | Range | IE type and reference | Semantics description | Criticality | Assigned Criticality |
|---|---|---|---|---|---|---|
| SCG LTM Addition Information Modification Request | O | | | This IE may be sent to the target SN. | YES | ignore |
| >Maximum Number of PSCells | O | | INTEGER (1...8, ...) | Indicates the maximum number of PSCells that the target SN may prepare. | - | |
| >Estimated Arrival Probability | O | | INTEGER (1...100) | Indicates the arrival probability for the UE towards the candidate target SN. | - | |
| >SCG LTM Request Information | O | | ... | Indicates that SN modification is for SCG LTM preparation or modification. | YES | reject |
| >SCG LTM Inter-SN Execution Notification | O | | ENUMERATED (true, ...) | Indicates that inter-SN SCG LTM was executed. | YES | reject |

The above description is merely an example, and all solutions the first node 101 modifies the LTM candidate configuration prepared by the second node 102 for the terminal through the sixth message should fall within the protection scope of the present disclosure.

In some embodiments, the solution in which the second node 102 modifies the LTM candidate configuration prepared for the terminal is similar to the above solution in which the second node 102 modifies the LTM candidate configuration prepared for the terminal based on the seventh message, and is not repeated here.

Step S2111, the first node 101 sends an eighth message to the third node 103.

In some embodiments, the third node 103 may include, but is not limited to, a source SN in a dual connectivity scenario.

In some embodiments, after receiving the third message sent by the second node 102, the first node 101 sends the eighth message to the third node. The third message is configured to indicate that the terminal has successfully accessed the second node 102, and the eighth message may be configured to release a resource of the third node 103, which avoids resource waste caused by the terminal still occupying the resource of the third node 103 (S-SN) for a long time when the terminal has already accessed the second node 102.

In some embodiments, the eighth message may include any of:
an SN release request message;
an eighth Xn message configured to release an SN resource; or
an eighth inter-node RRC message configured to release an SN resource.

In some embodiments, the eighth message may include, but is not limited to, at least one of:
LTM indication information; or
release cause indication information.

For example, when the eighth message includes the LTM indication information, the eighth message is further configured to inform the third node 103 that the change of the service node of the terminal is triggered by the LTM.

For example, the release cause indication information may be configured to indicate the SCG LTM, that is, the release cause is that (MN or SN triggered) SCG LTM with MN involvement is occurred.

In some embodiments, the third node 103 receives the eighth message.

In some embodiments, the third node 103 releases the resource of the LTM candidate configuration corresponding to the terminal based on the eighth message.

Step S2112, the first node 101 sends a ninth message to the third node 103.

In some embodiments, after executing step S2101, if the first node 101 receives the second message sent by the second node 102, the first node 101 may send the ninth message to the third node 103. The second message includes the LTM candidate configuration.

In some embodiments, the ninth message may be used for SN change confirmation.

In some embodiments, the ninth message may include, but is not limited to at least one of:
an identifier of the second node that prepares the LTM candidate configuration for a terminal;
an SCG LTM candidate cell identifier; or
an SCG LTM candidate cell configuration identifier.

In some embodiments, the ninth message may include any of:
an SN Change Confirm message;
a ninth Xn message configured for SN Change Confirm; or
a ninth inter-node RRC message configured for SN Change Confirm.

In one example, the ninth message is the SN Change Confirm message, to which an SCG LTM information confirmation information unit may be added. Further, the SCG LTM information confirmation information unit may include a multi-target SN node list, and the multi-target SN node list may further include a multi-target SN node item. Further, the multi-target SN node item may include a target SN node identifier, a candidate primary and secondary cell (PSCell) list, and the candidate PSCell list may further include a candidate cell item, and the candidate cell item may also include a PSCell identifier, as shown in Table 10.

**Table 10**

| IE Name | Presence | Range | IE type and reference | Semantics description | Criticality | Assigned Criticality |
|---|---|---|---|---|---|---|
| SCG LTM Information Required | O | | | | YES | ignore |
| > multi-target SN node list | | 1 | | | - | |
| >> multi-target SN node item | | 1...Maximum number of SN | | | - | |
| >>> target SN node identifier | M | | Global NG-RAN Node ID | | - | |
| >>> candidate PSCell list | | 1 | | | - | |
| >>>> candidate PSCell item | M | 1...Maximum number of candidate PSCells | | | - | |
| >>>>> PSCell identifier | M | | | NR CGI | - | |

In some embodiments, the first node 101 may provide at least one of the identifier of the second node for preparing the LTM candidate configuration for the terminal, the SCG LTM candidate cell identifier, or the SCG LTM candidate configuration identifier to the third node 103 so that the third node 103 determines that the SCG LTM is completed.

In some embodiments, names of information and the like are not limited to the names recorded in embodiments. The terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" may be used interchangeably.

In some embodiments, the terms such as "send", "emit", "report", "issue", "transmit", "bidirectionally transmit", "send and/or receive" and the like may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "certain", "preset", "predetermined", "set", "indicated", "a/an", "any", "first", and the like may be used interchangeable. "certain A", "preset A", "predetermined A", "set A", "indicated A", "an A", "any A", "first A" may be interpreted as A predefined in a protocol, or as A obtained via setting, configuration, or indication, or as certain A, a, any A, or first A, etc., but is not limited herein.

In some embodiments, the information transmission method in the embodiments of the present disclosure may include at least one of steps S2101 to S2112. For example, step S2101 may be implemented as an independent embodiment, step S2102 may be implemented as an independent embodiment, steps S2101+S2102 may be implemented as an independent embodiment, step S2103 may be implemented as an independent embodiment, step S2104 may be implemented as an independent embodiment, steps S2103+S2104 may be implemented as an independent embodiment, step S2105 may be implemented as an independent embodiment, step S2106 may be implemented as an independent embodiment, step S2107 may be implemented as an independent embodiment, and step S2108 may be implemented as an independent embodiment. As an independent embodiment, step S2109 may be implemented as an independent embodiment, steps S2107+S2109 may be implemented as an independent embodiment, step S2110 may be implemented as an independent embodiment, step S2111 may be implemented as an independent embodiment, step S2112 may be implemented as an independent embodiment, steps S2101+S2111 may be implemented as an independent embodiment, steps S2101+S2112 may be implemented as an independent embodiment, and steps S2101 to S2112 may be implemented as independent embodiments, but are not limited thereto.

In some embodiments, step S2101 is optional, and one or more of these steps may be omitted or replaced in different embodiments. For example, in a non-DC scenario, or in a DC scenario with MN triggered SCG LTM with MN involvement, step S2101 may not be performed.

In some embodiments, step S2102 is optional, and one or more of these steps may be omitted or replaced in different embodiments. For example, when the second node 102 receives the first message from other execution entities, step S2102 may not be performed.

In some embodiments, step S2103 is optional, and one or more of these steps may be omitted or replaced in different embodiments. For example, if the second node 102 is unable to prepare or generate the LTM candidate configuration for the terminal or if the second node 102 prepares or generates the Layer 3 mobility configuration for the terminal based on its own policy, step S2103 may not be performed.

In some embodiments, step S2104 is optional, and one or more of these steps may be omitted or replaced in different embodiments. For example, when the second node 102 prepares or generates the LTM candidate configuration for the terminal, step S2104 may not be performed.

In some embodiments, step S2103 or step S2104 may be performed selectively.

In some embodiments, both step S2103 and step S2104 may be performed.

In some embodiments, step S2105 is optional, and one or more of these steps may be omitted or replaced in different embodiments. For example, when the first node 101 acquires the LTM candidate configuration and/or the Layer 3 mobility configuration from other execution entities, step S2105 may not be performed.

In some embodiments, step S2106 is optional, and one or more of these steps may be omitted or replaced in different embodiments. For example, if the first node receives the third message from other execution entities or the first node defaults to a fact that the change of the service node of the terminal is triggered by the LTM, step S2106 may not be performed.

In some embodiments, step S2107 is optional, and one or more of these steps may be omitted or replaced in different embodiments. For example, when the second node actively initiates the cancellation of the LTM candidate configuration, step S2107 may not be performed.

In some embodiments, step S2108 is optional, and one or more of these steps may be omitted or replaced in different embodiments. For example, when the first node initiates the cancellation of the LTM candidate configuration, step S2108 may not be performed.

In some embodiments, step S2107 or step S2108 may be performed selectively.

In some embodiments, step S2109 is optional, and one or more of these steps may be omitted or replaced in different embodiments. For example, when the first node 101 actively initiates the modification of the LTM candidate configuration, step S2109 may not be performed.

In some embodiments, step S2110 is optional, and one or more of these steps may be omitted or replaced in different embodiments. For example, if the LTM candidate configuration does not need to be modified, step S2110 may not be performed.

In some embodiments, step S2111 is optional, and one or more of these steps may be omitted or replaced in different embodiments. For example, when the third node has released the resource, step S2111 may not be performed.

In some embodiments, step S2112 is optional, and one or more of these steps may be omitted or replaced in different embodiments. For example, in a non-DC scenario, or in a DC scenario with MN triggered SCG LTM with MN involvement, step S2111 may not be performed.

In some embodiments, when both step S2103 and step S2104 are executed, an execution order is not limited.

In some embodiments, an execution order of steps S2101 to S2112 is not limited. For example, nodes may execute preceding steps after executing one or more subsequent steps based on network implementation, which is not limited in the disclosure.

In some embodiments, steps S2101 to S2112 are optional, and one or more of these steps may be omitted or replaced in different embodiments.

In the above embodiment, the method may perform inter-node interaction for LTM, support LTM configuration, and improve LTM availability.

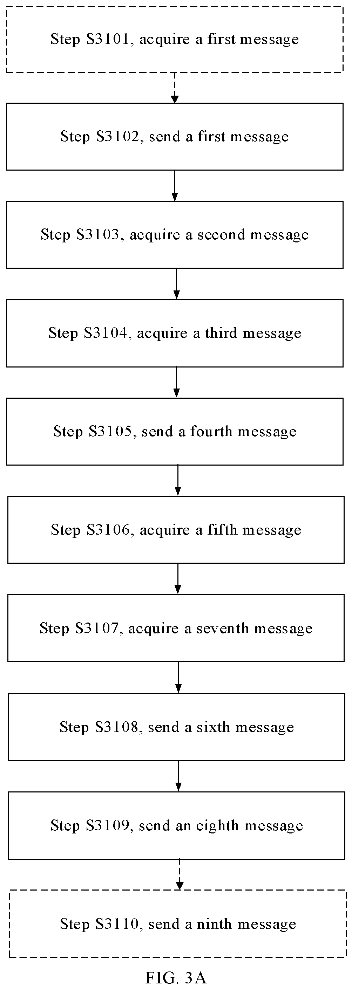

FIG. 3A is a schematic diagram illustrating an interaction of an information transmission method according to an embodiment of the disclosure. As shown in FIG. 3A, embodiments of the present disclosure relate to an information transmission method, performed by a first node 101. The method includes the following steps.

Step S3101, a first message is acquired.

In some embodiments, the first node 101 may acquire the first message from a third node 103, but is not limited thereto. The first node 101 may also receive the first message sent by other entities.

In some embodiments, the first node 101 may acquire the first message determined according to a predefined rule.

In some embodiments, the first node 101 may acquire the first message by performing processing.

In some embodiments, step S3101 is omitted, the first node 101 autonomously implements a function indicated by the first message, or the first node 101 acquires the first message based on a predefined rule or a protocol agreement, or the above function is omitted or default.

In some embodiments for the optional implementation of step S3101, reference may be made to the optional implementation of step S2101 in FIG. 2 and other related parts of the embodiment involved in FIG. 2, which will not be repeated here.

Step S3102, the first message is sent.

In some embodiments, the first node 101 sends the first message to the second node 102.

In some embodiments, the second node 102 receives the first message.

In some embodiments, for the optional implementation of step S3102, reference may be made to the optional implementation of step S2102 in FIG. 2 and other related parts of the embodiment involved in FIG. 2, which will not be repeated here.

Step S3103, a second message is acquired.

In some embodiments, the second message may include, but is not limited to, at least one of:
an LTM candidate configuration; or
a Layer 3 mobility configuration.

In some embodiments, the first node 102 may acquire the second message from the second node 102, but is not limited thereto. The first node 102 may also receive the second message sent by other entities.

In some embodiments, the first node 102 may acquire the second message determined according to a predefined rule.

In some embodiments, the first node 102 may acquire the second message by performing processing.

In some embodiments, step S3103 is omitted, the first node 102 autonomously implements a function indicated by the second message, or the first node 102 acquires the second message based on predefined rules or protocol agreements, or the above function is omitted or default.

In some embodiments, for the optional implementation of step S3103, reference may be made to the optional implementation of step S2105 in FIG. 2 and other related parts of the embodiment involved in FIG. 2, which will not be repeated here.

Step S3104, a third message is acquired.

In some embodiments, the third message is configured to notify the first node 101 that LTM execution is successfully completed.

In some embodiments, the first node 102 may acquire the third message from the second node 102, but is not limited thereto. The first node 102 may also receive the third message sent by other entities.

In some embodiments, the first node 102 may acquire the third message determined according to a predefined rule.

In some embodiments, the first node 102 may acquire the third message by performing processing.

In some embodiments, step S3104 is omitted, the first node 102 autonomously implements a function indicated by the third message, or the first node 102 acquires the third message based on a predefined rule or a protocol agreement, or the above function is omitted or default.

In some embodiments, for the optional implementation of step S3104, reference may be made to the optional implementation of step S2106 in FIG. 2 and other related parts of the embodiment involved in FIG. 2, which will not be repeated here.

Step S3105, a fourth message is sent.

In some embodiments, the fourth message is configured to cancel an LTM candidate configuration prepared by the second node 102 for a terminal.

In some embodiments, the first node 101 sends the fourth message to the second node 102.

In some embodiments, the second node 102 receives the fourth message.

In some embodiments, for the optional implementation of step S3105, reference may be made to the optional implementation of step S2107 in FIG. 2 and other related parts of the embodiment involved in FIG. 2, which will not be repeated here.

Step S3106, a fifth message is acquired.

In some embodiments, the fifth message is configured to cancel the LTM candidate configuration prepared by the second node 102 for the terminal.

In some embodiments, the first node 102 may acquire the fifth message from the second node 102, but is not limited thereto. The first node 102 may also receive the fifth message sent by other entities.

In some embodiments, the first node 102 may acquire the fifth message determined according to a predefined rule.

In some embodiments, the first node 102 may acquire the fifth message by performing processing.

In some embodiments, step S3106 is omitted, the first node 102 autonomously implements a function indicated by the fifth message, or the first node 102 acquires the fifth message based on a predefined rule or a protocol agreement, or the above function is omitted or default.

In some embodiments, for the optional implementation of step S3106, reference may be made to the optional implementation of step S2108 in FIG. 2 and other related parts of the embodiment involved in FIG. 2, which will not be repeated here.

Step S3107, a seventh message is acquired.

In some embodiments, the seventh message may be configured to request the first node 101 to initiate modification of an LTM candidate configuration.

In some embodiments, the first node 102 may acquire the seventh message from the second node 102, but is not limited thereto. The first node 102 may also receive the seventh message sent by other entities.

In some embodiments, the first node 102 may acquire the seventh message determined according to a predefined rule.

In some embodiments, the first node 102 may acquire the seventh message by performing processing.

In some embodiments, step S3107 is omitted, the first node 102 autonomously implements a function indicated by the seventh message, or the first node 102 acquires the seventh message based on a predefined rule or a protocol agreement, or the above function is omitted or default.

In some embodiments, for the optional implementation of step S3106, reference may be made to the optional implementation of step S2109 in FIG. 2 and other related parts of the embodiment involved in FIG. 2, which will not be repeated here.

Step S3108, a sixth message is sent.

In some embodiments, the sixth message may be used to request modification of the LTM candidate configuration prepared by the second node 102 for the terminal.

In some embodiments, the first node 101 sends the sixth message to the second node 102.

In some embodiments, the second node 102 receives the sixth message.

In some embodiments, for the optional implementation of step S3108, reference may be made to the optional implementation of step S2110 in FIG. 2 and other related parts of the embodiment involved in FIG. 2, which will not be repeated here.

Step S3109, an eighth message is sent.

In some embodiments, the eighth message may be configured to release a resource of the third node 103.

In some embodiments, the first node 101 sends the eighth message to the third node 103.

In some embodiments, the third node 103 receives the eighth message.

In some embodiments, for the optional implementation of step S3109, reference may be made to the optional implementation of step S2111 in FIG. 2 and other related parts of the embodiment involved in FIG. 2, which will not be repeated here.

Step S3110, a ninth message is sent.

In some embodiments, the ninth message may include, but is not limited to, at least one of:
an identifier of the second node that prepares the LTM candidate configuration for a terminal;
an SCG LTM candidate cell identifier; or
an SCG LTM candidate cell configuration identifier.

In some embodiments, the first node 101 sends the ninth message to the third node 103.

In some embodiments, the third node 103 receives the ninth message.

In some embodiments, for the optional implementation of step S3110, reference may be made to the optional implementation of step S2112 in FIG. 2 and other related parts of the embodiment involved in FIG. 2, which will not be repeated here.

In some embodiments, steps S3101 to S3110 are optional, and one or more of these steps may be omitted or replaced in different embodiments.

In some embodiments, an execution order of steps S3101 to S3110 is not limited.

In the above embodiment, the first node may request the LTM candidate configuration, modify or cancel the LTM candidate configuration, which may perform inter-node interaction for LTM, support LTM configuration, and improve LTM availability.

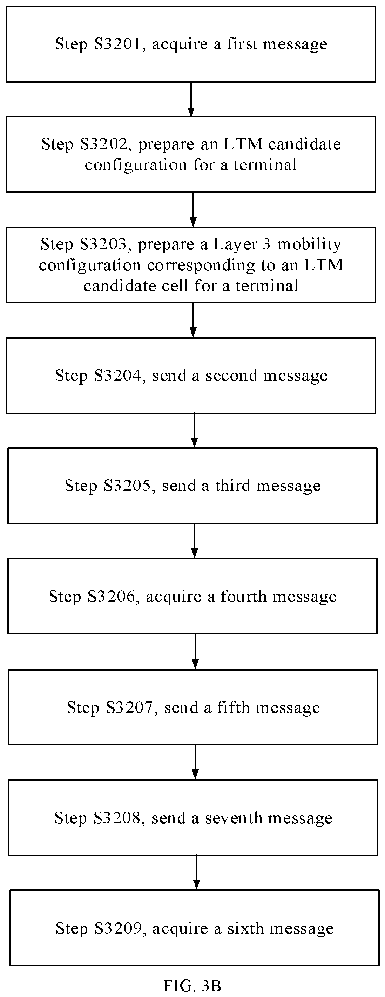

FIG. 3B is a schematic diagram illustrating an interaction example of an information transmission method according to an embodiment of the disclosure. As shown in FIG. 3B, embodiments of the present disclosure relate to an information transmission method, executed by a second node 102. The method includes the following steps.

Step S3201, a first message is acquired.

In some embodiments, the second node 102 may acquire the first message from a first node 101, but is not limited thereto. The second node 102 may also receive the first message sent by other entities.

In some embodiments, the second node 102 may acquire the first message determined according to a predefined rule.

In some embodiments, the second node 102 may acquire the first message by performing processing.

In some embodiments, step S3201 is omitted, the second node 102 autonomously implements a function indicated by the first message, or the second node 102 may acquire the first message based on a predefined rule or a protocol agreement, or the above function is omitted or default.

In some embodiments, for the optional implementation of step S3201, reference may be made to the optional implementation of step S2102 in FIG. 2 and other related parts of the embodiment involved in FIG. 2, which will not be repeated here.

Step S3202, an LTM candidate configuration is prepared (or generated) for a terminal.

In some embodiments, for the optional implementation of step S3202, reference may be made to the optional implementation of step S2103 in FIG. 2 and other related parts of the embodiment involved in FIG. 2, which will not be repeated here.

Step S3203, a Layer 3 mobility configuration corresponding to an LTM candidate cell is prepared (or generated) for a terminal.

In some embodiments, for the optional implementation of step S3203, reference may be made to the optional implementation of step S2104 in FIG. 2 and other related parts of the embodiment involved in FIG. 2, which will not be repeated here.

Step S3204, a second message is sent.

In some embodiments, the second message may include, but is not limited to, at least one of:
an LTM candidate configuration; or
a Layer 3 mobility configuration.

In some embodiments, the second node 102 sends the second message to the first node 101.

In some embodiments, the first node 101 receives the second message.

In some embodiments, for the optional implementation of step S3204, reference may be made to the optional implementation of step S2105 in FIG. 2 and other related parts of the embodiment involved in FIG. 2, which will not be repeated here.

Step S3205, a third message is sent.

In some embodiments, the third message is configured to notify the first node 101 that LTM execution is successfully completed.

In some embodiments, the second node 102 sends the third message to the first node 101.

In some embodiments, the first node 101 receives the third message.

In some embodiments, for the optional implementation of step S3205, reference may be made to the optional implementation of step S2106 in FIG. 2 and other related parts of the embodiment involved in FIG. 2, which will not be repeated here.

Step S3206, a fourth message is acquired.

In some embodiments, the fourth message is configured to cancel an LTM candidate configuration prepared by the second node 102 for a terminal.

In some embodiments, the second node 102 may acquire the fourth message from the first node 101, but is not limited thereto. The second node 102 may also receive the fourth message sent by other entities.

In some embodiments, the second node 102 may acquire the fourth message determined according to a predefined rule.

In some embodiments, the second node 102 may acquire the fourth message by performing processing.

In some embodiments, step S3206 is omitted, the second node 102 autonomously implements a function indicated by the fourth message, or the second node 102 may acquire the fourth message based on a predefined rule or a protocol agreement, or the above function is omitted or default.

In some embodiments, for the optional implementation of step S3206, reference may be made to the optional implementation of step S2107 in FIG. 2 and other related parts of the embodiment involved in FIG. 2, which will not be repeated here.

Step S3207, a fifth message is sent.

In some embodiments, the fifth message is configured to cancel the LTM candidate configuration prepared by the second node 102 for the terminal.

In some embodiments, the second node 102 sends the fifth message to the first node 101.

In some embodiments, the first node 101 receives the fifth message.

In some embodiments, for the optional implementation of step S3207, reference may be made to the optional implementation of step S2108 in FIG. 2 and other related parts of the embodiment involved in FIG. 2, which will not be repeated here.

Step S3208, a seventh message is sent.

In some embodiments, the seventh message may be configured to request the first node 101 to initiate modification of the LTM candidate configuration.

In some embodiments, the second node 102 sends the seventh message to the first node 101.

In some embodiments, the first node 101 receives the seventh message.

In some embodiments, for the optional implementation of step S3208, reference may be made to the optional implementation of step S2109 in FIG. 2 and other related parts of the embodiment involved in FIG. 2, which will not be repeated here.

Step S3209, a sixth message is acquired.

In some embodiments, the sixth message may be used to is configured to request to modify the LTM candidate configuration prepared by the second node 102 for a terminal.

In some embodiments, the second node 102 may acquire the sixth message from the first node 101, but is not limited thereto. The second node 102 may also receive the sixth message sent by other entities.

In some embodiments, the second node 102 may acquire the sixth message determined according to a predefined rule.

In some embodiments, the second node 102 may acquire the sixth message by performing processing.

In some embodiments, step S3209 is omitted, the second node 102 autonomously implements a function indicated by the sixth message, or the second node 102 may acquire the sixth message based on a predefined rule or a protocol agreement, or the above function is omitted or default.

In some embodiments, for the optional implementation of step S3209, reference may be made to the optional implementation of step S2110 in FIG. 2 and other related parts of the embodiment involved in FIG. 2, which will not be repeated here.

In some embodiments, steps S3201 to S3209 are optional, and one or more of these steps may be omitted or replaced in different embodiments.

In some embodiments, an execution order of steps S3201 to S3209 is not limited.

In the above embodiment, the second node may prepare the LTM candidate configuration for the terminal based on a request of the first node, and may also modify, cancel, etc. the LTM candidate configuration, which may perform inter-node interaction for LTM, support LTM configuration, and improve LTM availability.

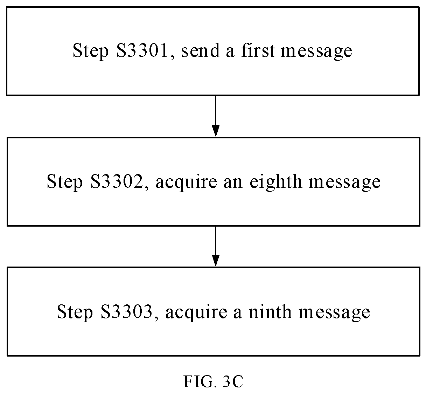

FIG. 3C is a schematic diagram illustrating an interaction example of an information transmission method according to an embodiment of the disclosure. As shown in FIG. 3C, embodiments of the present disclosure relate to an information transmission method, performed by a third node 103. The method includes the following steps.

Step S3301, a first message is sent.

In some embodiments, the first message includes first information, and the first information may be configured to request an LTM.

In some embodiments, the third node 103 sends the first message to the first node 101.

In some embodiments, the first node 101 receives the first message.

In some embodiments, for the optional implementation of step S3301, reference may be made to the optional implementation of step S2101 in FIG. 2 and other related parts of the embodiment involved in FIG. 2, which will not be repeated here.

Step S3302, an eighth message is acquired.

In some embodiments, the eighth message may be used to release a resource of the third node 103.

In some embodiments, the third node 103 may acquire the eighth message from the first node 101, but is not limited thereto. The third node 103 may also receive the eighth message sent by other entities.

In some embodiments, the third node 103 may acquire the eighth message determined according to a predefined rule.

In some embodiments, the third node 103 may acquire the eighth message by performing processing.

In some embodiments, step S3302 is omitted, the third node 103 autonomously implements a function indicated by the eighth message, or the third node 103 acquires the eighth message based on a predefined rule or a protocol agreement, or the above function is omitted or default.

In some embodiments, for the optional implementation of step S3302, reference may be made to the optional implementation of step S2111 in FIG. 2 and other related parts of the embodiment involved in FIG. 2, which will not be repeated here.

Step S3303, a ninth message is acquired.

In some embodiments, the ninth message may include, but is not limited to, at least one of:
an identifier of the second node that prepares the LTM candidate configuration for a terminal;
an SCG LTM candidate cell identifier; or
an SCG LTM candidate cell configuration identifier.

In some embodiments, the third node 103 may acquire the ninth message from the first node 101, but is not limited thereto. The third node 103 may also receive the ninth message sent by other entities.

In some embodiments, the third node 103 may acquire the ninth message determined according to a predefined rule.

In some embodiments, the third node 103 may acquire the ninth message by performing processing.

In some embodiments, step S3303 is omitted, the third node 103 autonomously implements a function indicated by the ninth message, or the third node 103 acquires the ninth message based on a predefined rule or a protocol agreement, or the above function is omitted or default.

In some embodiments, for the optional implementation of step S3303, reference may be made to the optional implementation of step S2112 in FIG. 2 and other related parts of the embodiment involved in FIG. 2, which will not be repeated here.

In some embodiments, steps S3301 to S3303 are optional, and one or more of these steps may be omitted or replaced in different embodiments.

In some embodiments, an execution order of steps S3301 to S3303 is not limited.

In the above embodiment, in a procedure of SN triggered SCG LTM with MN involvement, the method may perform inter-node interaction for LTM, support LTM configuration, and improve LTM availability.

The above procedure is further illustrated below with examples.

In an embodiment of the present disclosure, during an LTM preparation process, a service node (first node) of a terminal carries LTM indication information in a preparation request message sent to a candidate node (second node), and the LTM indication information may be configured to indicate that a request message is configured to request the candidate node to prepare an LTM for the terminal.

In some embodiments, during the LTM preparation process, the service node of the terminal carries indication information (first indication information) of LTM fallback L3 mobility in the preparation request message sent to the candidate node, and the indication information is configured to indicate that the request message is configured to request the candidate node to prepare the LTM for the terminal. When the candidate node refuses to prepare the LTM for the terminal, the candidate node may choose to generate a Layer 3 (L3) mobility-related configuration for the terminal.

In some embodiments, in the LTM, the serving node carries a list of LTM candidate cells to be canceled in a cancel message sent to the candidate node, and the cancel message is configured to notify the candidate node to cancel a prepared LTM. The candidate node may also include a list of LTM candidate cells to be canceled in a cancel message sent to a source base station, and the cancel message is configured to notify the candidate node to cancel the prepared LTM.

The LTM indication information in embodiments of the present disclosure may be indication information corresponding to an LTM triggered by the network, or may be indication information corresponding to an LTM (conditional LTM, CLTM) triggered by the terminal based on conditions. Based on the above LTM indication information, the network side may prepare or generate the LTM and/or the CLTM for the terminal.

In some embodiments, during an LTM configuration process, a corresponding handover request/SN addition (modification, change) request message (first message) may include the LTM indication information to indicate that the first node requests the second node to prepare an LTM configuration for the terminal. After receiving the request message, the second node sends a corresponding acknowledgement message (second message) to the first node, the acknowledgement message may also include the LTM indication information to indicate that the second node confirms to prepare the LTM configuration for the terminal.

In addition to the LTM indication information, the first node may also carry indication information (first indication information) of LTM fallback to L3 mobility in the request message, and the second node may also carry the indication information of LTM fallback to L3 mobility in a feedback message.

After performing the LTM configuration, the first node may initiate an LTM configuration deletion process, or may include LTM indication information in a corresponding handover cancel/SN release (modification) request message (fourth message/sixth message), to indicate that the first node requests the second node to delete the corresponding LTM configuration. The second node may also initiate a corresponding deletion request (fifth message/seventh message), which carries the LTM indication information.

The LTM indication information may be implemented in the following ways.

Solution 1, a new Xn message for LTM preparation and configuration update deletion is introduced.

Solution 2, parameters and information elements for LTM, indicating that the message is related to the LTM configuration, are included in an existing Xn message used for handover preparation and PSCell addition and change. For details, reference may be made to Tables 1 to 10 above.

Solution 3, information in an existing Xn message used for handover configuration (such as CHO configuration) and PSCell addition and change configuration (such as CPAC configuration) is reused for the LTM configuration and update process, and 1-bit indication information is added to indicate that this information is used for the LTM.

For example, the 1-bit indication information may indicate that the entire Xn message is used for the LTM configuration and update.

For example, the 1-bit indication information may also be indicated separately for each candidate node or candidate cell. This request message is used to request the second node to prepare a mobility configuration for the terminal, which includes candidate cells 1, 2, and 3. Candidate cell 3 is associated with the LTM indication information. Therefore, the second node needs to prepare L3 mobility configurations associated with candidate cells 1 and 2, and an LTM configuration associated with candidate cell 3 for the terminal.

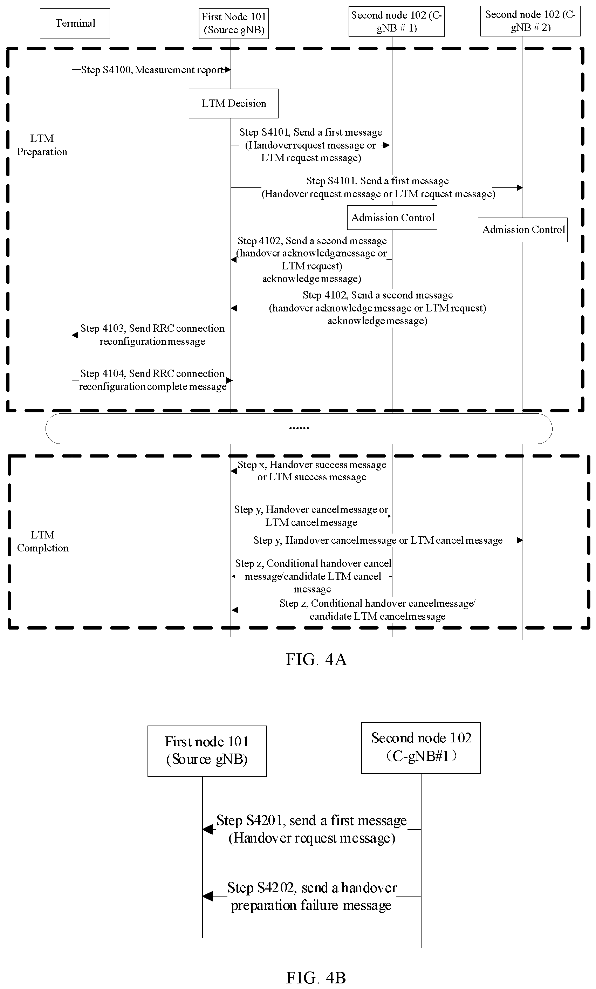

Example 1, in a non-DC scenario, a first node is a source gNB and a second node is a candidate gNB. The information transmission procedure is shown in FIG. 4A and includes the following steps.

In step S4100, a terminal sends a measurement report to the source gNB. The source gNB decides to configure an LTM and starts LTM preparation.

In step S4101, the source gNB sends a first message (e.g., a Handover Request message or a new Xn message, such as an LTM Request message) to the candidate gNB, and the first message includes first information, and the first information is used to request the LTM.

In embodiments of this disclosure, the candidate gNB may also be referred to as a target gNB (the target gNB is a serving gNB that the terminal accesses after performing a handover and is one of the candidate gNBs). The gNB may be replaced by an NG-RAN node, a 6G network node, or a node in a future network, and is not limited to gNB. The candidate cell may also be referred to as a target cell.

In some embodiments, the first information may include an LTM candidate cell identifier, which indicates a candidate cell of the LTM, such as a target cell global identifier (Target Cell Global ID), and may also include an LTM candidate configuration identifier.

In some embodiments, the first information may include LTM indication information, and the LTM indication information is used to instruct the source gNB to request the candidate gNB to prepare LTM configuration and/or related resources for the terminal.

For example, LTM indication information may be included in the first message. If the first message includes this indication information, it indicates that the first message is used for preparation of MCG LTM.

For example, the LTM indication information may be of an enumeration type, for example, true. When the LTM indication information is true, it indicates that the first message is used to request the LTM. For example, the first message is a handover request message, which includes the Target Cell Global ID, then the first message is used to request the candidate gNB to configure the LTM for a cell corresponding to the Target Cell Global ID.

For example, the LTM indication information may also be used for LTM-initiation or LTM-replace.

For example, if the LTM indication information indicates the LTM-initiation, the candidate gNB is requested to prepare or generate the LTM for the terminal. The candidate cell corresponding to the LTM may be indicated by the LTM candidate cell identifier.

For another example, if the LTM indication information indicates the LTM-replace, the first information also includes an Xn interface terminal identifier (XnAP ID) assigned by the candidate gNB to the terminal. The candidate gNB deletes an LTM candidate configuration corresponding to the XnAP ID and LTM candidate cell identifier that is prepared by the candidate gNB.

Accordingly, if the LTM indication information indicates LTM-replace/update, but the candidate gNB has not prepared LTM for the terminal indicated by the XnAP ID, or the LTM candidate cell identifier is not prepared for terminal-related signaling connection, the candidate gNB may reject the process using an H message (e.g., a handover preparation failure message), as shown in FIG. 4B.

In some embodiments, if the candidate gNB refuses to configure for the terminal the LTM corresponding to the LTM candidate cell, the candidate gNB may prepare for the terminal an L3 mobility configuration and a resource corresponding to the LTM candidate cell. The L3 mobility includes handover and CHO.

For example, the first information includes first indication information (also referred to as fallback indication information), and the first indication information indicates that the candidate gNB is allowed to prepare or generate L3 mobility for the terminal in a case where the candidate gNB does not support the configuration of the LTM candidate cell. If the candidate gNB refuses to configure an LTM corresponding to the LTM candidate cell for the terminal, the candidate gNB may prepare L3 mobility configuration and resources corresponding to the LTM candidate cell for the terminal based on the first indication information.

For example, in response to the first message including both the first information and relevant information for requesting the L3 mobility (e.g., CHO), the candidate gNB may:
prioritize preparing the LTM for the terminal, in which, if the candidate gNB cannot prepare the LTM, the candidate gNB prepares an L3 mobility configuration of the corresponding target cell for the terminal;
determine to prepare a mobility for the terminal and the corresponding target cell based on base station implementation; or
prepares for the terminal not only an LTM corresponding to the candidate cell, but also an L3 mobility corresponding to the candidate cell.

When the first message is a handover request message, information elements included in the first message may be as shown in Table 1, for example.

Step S4102, the candidate gNB sends a second message to the source gNB.

In response to the candidate gNB receiving the first message sent by the source gNB, if the first message includes the first information, the candidate gNB prepares the LTM based on the first message and sends the LTM candidate configuration and/or the Layer 3 mobility configuration to the source gNB through the second message (e.g., Handover request acknowledge or a new Xn message, such as an LTM request acknowledge message).

In some embodiments, the first message includes the LTM indication information. If the candidate gNB accepts to configure a corresponding LTM for a terminal and a candidate cell in the information, the candidate gNB generates the LTM candidate configuration and sends the LTM candidate configuration to the source gNB through the second message.

In some embodiments, the first message includes the LTM indication information and first indication information. If the candidate gNB refuses to configure an LTM for the terminal and the candidate cell, and can also configure the corresponding L3 mobility for the terminal and the candidate cell, the candidate gNB generates the L3 mobility configuration and sends the L3 mobility configuration to the source gNB through the second message.

Step S4103, the source gNB sends an RRCReconfiguration message including the LTM candidate configuration to the terminal.

Step S4104, the terminal sends an RRCReconfigurationComplete message to the source gNB.

In step x, after LTM is completed, the candidate gNB may send a success indication message (third message) to the source gNB to inform the source gNB that LTM execution is successfully completed and the terminal successfully accesses the candidate gNB.

For example, the success indication message may a handover success message including the LTM indication information to indicate that a PCell change is achieved through the LTM.

For example, the success indication message may also be a new LTM success message.

When the third message is the handover success message, which includes information elements such as shown in Table 6.

In step y, after the source gNB prepares or generates the LTM for the terminal, the source gNB may cancel the LTM prepared by the candidate gNB for the terminal by sending a first cancellation message (fourth message). The first cancellation message may be an existing Handover Cancel message including the LTM indication information, or the first cancellation message may be a new Xn message for canceling the LTM configuration.

For example, the fourth message may further include an LTM candidate cell identifier (or an LTM candidate cell identifier list) and/or an LTM candidate configuration identifier (or an LTM candidate configuration identifier list) for indicating one or more LTM candidate cells to be cancelled.

For example, the fourth message is a Handover Cancel message, which includes information elements such as shown in Table 7.

In step z, after the candidate gNB prepares the LTM for the terminal and sends the configuration information of the prepared LTM to the source gNB, the candidate gNB may also cancel the LTM prepared by the candidate gNB for the terminal through a second cancellation message (fifth message). The fifth message may be an existing Conditional Handover Cancel message including the LTM indication information, or may be a new Xn message (Candidate LTM Cancel message) for canceling the LTM configuration.

For example, the fifth message may further include an LTM candidate cell identifier (or an LTM candidate cell identifier list) and/or an LTM candidate configuration identifier (or an LTM candidate configuration identifier list) to indicate one or more LTM candidate cells to be cancelled.

For example, the fifth message is a Conditional Handover Cancel message, which includes information elements shown in Table 8.

It should be noted that either step y or step z may be performed alternatively.

The above LTM indication information may be indication information corresponding to am LTM triggered by the network, or may be indication information corresponding to an LTM (Conditional LTM, CLTM) triggered by the terminal based on conditions. Based on the above indication information, the network side may prepare or generate LTM and/or CLTM for the terminal.

Example 2, for a NR-DC scenario.

Scenario 1, MCG LTM with SCG Release.

In scenario 1, after a first node, MN, triggers an LTM, the MN may release an associated SN, and the release cannot be rejected by the SN, thus avoiding mismatches between the terminal and the network. For this scenario, the MCG LTM procedure described above in the non-DC scenario can be reused, requiring only that a source MN sends an SN release request message (S-NODE RELEASE REQUEST) to the associated SN after receiving an LTM success message sent by a target MN to which the terminal accesses. After receiving the message, the SN releases a corresponding resource.

Scenario 2, inter-CU SCG LTM.

Scenario 2.1, MN initiated SCG LTM with MN involvement.

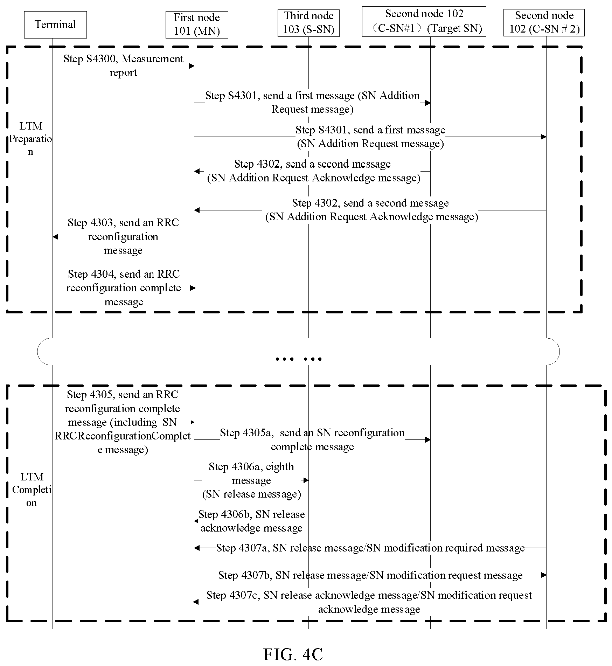

The information transmission procedure is shown in FIG. 4C, in which a first node is an MN and a second node is a candidate SN (C-SN). The procedure includes the following steps.

Step S4300, a terminal sends a measurement report to the MN, and the MN decides to configure an LTM and starts LTM preparation.

Step S4301, the MN sends a first message (SN addition request message) to the candidate SN, and the first message includes first information.

In some embodiments, the candidate SN may also be referred to as a target SN, and a candidate cell may also be referred to as a target cell.

In some embodiments, the first information may include one or more LTM candidate cell identifiers recommended by the MN, and may be implemented in one or more of the following ways.

The first information may be carried in the first message and sent to the C-SN through the first message, and the first message indicates that the first information indicates an LTM candidate cell or an LTM candidate cell list.

The first information may be sent to the C-SN via an inter-node RRC message. The inter-node RRC message may be carried in the first message and sent to the C-SN.

For example, in a case where the first information is sent to the C-SN via the inter-node RRC message, a new message ltmcandidateCellInfoListMN may be introduced in CG-ConfigInfo, which includes one or more recommended candidate LTM cells and may be represented by a latest L3 or L1 measurement result, that is, the CG-ConfigInfo may include one or more recommended candidate LTM cells, and the corresponding L1 or L3 measurement result.

For example, the first information includes LTM indication information, and the LTM indication information is used to instruct the MN to request the C-SN to prepare LTM configuration and/or related resources for the terminal.

For example, the LTM indication information may be true. When the LTM indication information is true, it indicates that the first message is used to request the LTM.

For example, the LTM indication information may be included in the first message. If the first message includes the indication information, it indicates that the first message is used for preparation of SCG LTM.

In some embodiments, if the C-SN refuses to configure the LTM corresponding to the LTM candidate cell for the terminal, the C-SN may prepare L3 mobility configuration and resources corresponding to the LTM candidate cell for the terminal, and L3 mobility includes PSCell change and CPA/CPC (including CPAC that supports subsequent mobility).

For example, the first information further includes the first indication information, and the first indication information indicates that the candidate gNB is allowed to prepare or generate the L3 mobility for the terminal in a case where the candidate gNB does not support configuring the LTM candidate cell. In a case where the C-SN refuses to configure the LTM corresponding to the LTM candidate cell for the terminal, the C-SN may prepare for the terminal the L3 mobility configuration and resource corresponding to the LTM candidate cell based on the first indication information.

For example, the first message includes both the first information and relevant information (e.g., CPAC) for requesting the L3 mobility. Then, the C-SN may:
prioritize preparing the LTM for the terminal, in which, if the candidate gNB cannot prepare the LTM, the candidate gNB prepares the L3 mobility of the corresponding target cell for the terminal;
determine to prepare a mobility for the terminal and the corresponding target cell based on a C-SN implementation; or
prepares for the terminal not only an LTM corresponding to the candidate cell, but also an L3 mobility corresponding to the candidate cell.

For example, the first information further includes the maximum number of configurable candidate cells, such as the maximum number of configurable PSCells, which indicates the maximum number of candidate PSCells that the C-SN receiving the message can configure for the terminal.

For example, the first message may be an SN addition request message, which includes information elements such as shown in Table 2.

For example, the first message may be CG-ConfigInfo, the information content of which has been introduced in the aforementioned embodiment and is not repeated here.

Step S4302, in response to the C-SN receiving the first message sent by the MN, if the first message includes the first information, the C-SN prepares the LTM based on the first message and sends the LTM configuration to the MN through a second message (e.g., an S-NODE ADDITION REQUEST ACKNOWLEDGE message).

In response to the first message including the LTM indication information, if the C-SN accepts to configure a corresponding LTM for a terminal and a candidate cell corresponding to the information, the C-SN generates the LTM configuration and sends the LTM configuration to the MN through the second message.

In response to the first message including the LTM indication information, if the C-SN refuses to configure the LTM for the terminal and the candidate cell, and can also configure the corresponding L3 mobility for the terminal and the candidate cell, then the C-SN generates the L3 mobility configuration and sends the L3 mobility configuration to the MN through the second message.

Step S4303, the MN sends an RRCReconfiguration message including the LTM candidate configuration to the terminal.

Step S4304, the terminal sends an RRCReconfigurationComplete message to the MN.

Step S4305, the terminal sends an RRCReconfigurationComplete message to the MN, and the message includes the message content of an SN RRC reconfiguration complete message.

Step S4205a, the MN sends the SN RRC reconfiguration complete message to the C-SN.

Step S4206a, after the MN prepares or generates the LTM for the terminal, if the S-SN does not prepare an SCG LTM configuration for the terminal, when the terminal triggers the LTM to access the candidate SN, the MN sends a release request message (an eighth message) to the S-SN, and the release request message carries indication information (or release cause indication information (such as new cause)) to indicate that the SN release is triggered by the LTM.

The MN may send an SN Modification Request message to the S-SN. The SN Modification Request message includes the LTM indication information (such as inter-SN SCG LTM execution notification). The LTM indication information is used to inform the S-SN that the terminal has successfully executed the inter-SN SCG LTM and changed the serving SN.

Based on the LTM indication information, the S-SN stops providing user data to the terminal and changes to a preparation state, that is, the S-SN becomes the C-SN.

Step S4206b, after releasing resources, the S-SN may send an SN Modification RequestAcknowledge message to the MN.

Step S4207a, the C-SN may initiate a fifth message to the MN to cancel the (SCG) LTM candidate configuration.

The C-SN may cancel all of prepared SCG LTMs or release all of resources prepared by the C-SN through the SN Release message.

For example, after the C-SN prepares the LTM for the terminal and sends configuration information of the prepared LTM to the MN, the C-SN may also cancel the LTM prepared by the C-SN for the terminal through the fifth message such as S-NODE RELEASE REQUIRED.

Step S4207b, the MN may send a fourth message to the C-SN to cancel the (SCG) LTM candidate configuration.

The MN may cancel all of prepared SCG LTMs or release all of resources prepared by the C-SN through the SN Release message.

For example, after the MN prepares or generates the LTM for the terminal, the MN may cancel the LTM prepared by the C-SN for the terminal by sending the fourth message (e.g., SN Release request). When the C-SN receives the fourth message, the SN releases the configuration and resources prepared for the terminal.

It should be noted that either step S4207a or step S4207b may be performed selectively.

It should also be noted that MN and the C-SN may initiate a process of modifying the SCG LTM configuration, in which, the MN and the C-SN may modify the prepared SCG LTM candidate configuration through an SN Modification process, such as deleting a part of SCG LTMs configured by T-SN for UE, adding new SCG LTM candidate configuration, and modifying an existing SCG LTM candidate configuration.

For example, steps S4207b and S4207c are performed. In step S4207b, the MN sends a sixth message carrying information for LTM configuration modification, such as an SN Modification Request message to the C-SN. After receiving the sixth message, the C-SN modifies the SCG LTM configuration based on the information for LTM configuration modification. Step S4207c is performed, and the C-SN sends an SN Modification Request Ack message to the MN. The modification process includes deleting SCG LTM configurations corresponding to a part of candidate SCGs, updating existing SCG LTM configuration information, and adding additional SCG LTM configurations. The information for LTM configuration modification includes LTM indication information, one or more recommended SCG LTM candidate cells, and may also include one or more SCG LTM candidate cells to be deleted/updated.

For example, steps S4207a to S4207c are performed, and the C-SN sends a seventh message carrying information for LTM configuration modification, such as an SN Modification Required message to the MN, requesting the MN to initiate an LTM configuration modification process. The SN Modification Required message carries LTM indication information and one or more SCG LTM candidate cells to be deleted/updated. After receiving the seventh message, the MN may send a sixth message to the C-SN and receive an SN Modification Request Ack message sent by the C-SN.

When the sixth message is an SN modification request (SN ModificationRequest) message, information elements included therein are shown in Table 9, for example.

Scenario 2.2, SN initiated SCG LTM with MN involvement.

For SN-initiated SCG LTM, compared with scenario 2.1, the S-SN initiates the SCG LTM process by sending a first message, such as an SN Change Required message, to the MN. The subsequent process is similar to scenario 2.1. After the C-SN completes the SCG LTM preparation process, the C-SN sends a second message, such as an SN addition request confirmation message, to the MN. The MN sends a ninth message, such as an SN Change Confirm message, to the C-SN to confirm that the SCG preparation process has been completed.

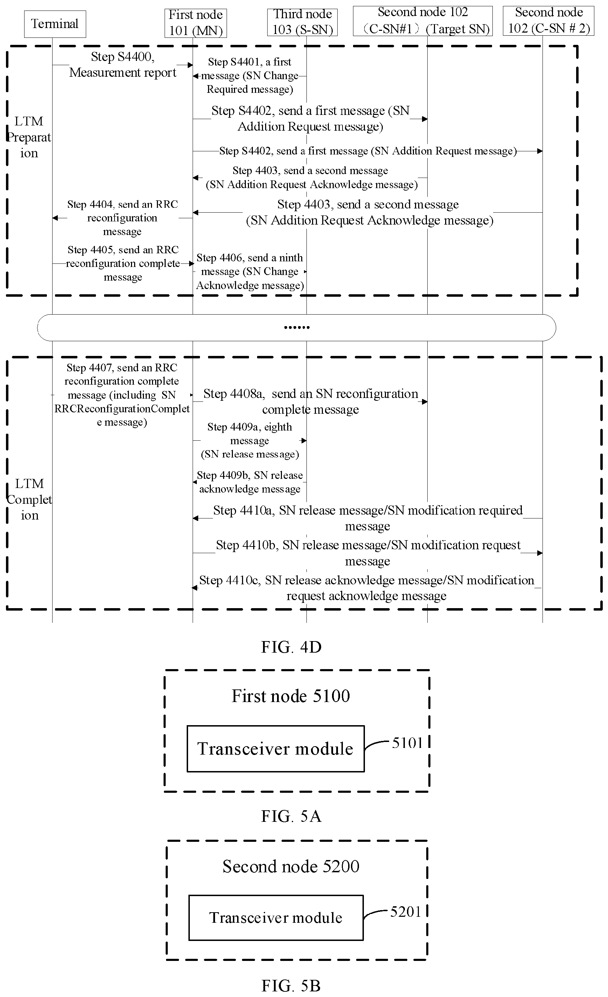

The procedure is shown in FIG. 4D, in which the first node is the MN, the second node is the C-SN, and the third node is the S-SN. The procedure includes the following steps.

Step S4400, a terminal sends a measurement report to the MN, and the MN decides to configure an LTM and starts LTM preparation.

Step S4401, the S-SN sends a first message to the MN.

The SN sends the first message (e.g., SN change request) to the MN, and the first message includes first information.

In some embodiments, the first information includes one or more LTM candidate cell identifiers recommended by the S-SN, and the S-SN sends one or more recommended C-SNs to the MN, each C-SN corresponding to a group of LTM candidate cell identifiers. The recommended LTM candidate cells may be implemented in one or more of the following ways.

The recommended LTM candidate cells may be carried in the first message and sent to the C-SN through the first message, and the first message indicates that the information indicates an LTM candidate cell or an LTM candidate cell list;
The recommended LTM candidate cells may be sent to a T-SN via an inter-node RRC message. The inter-node RRC message may be carried in the first message and sent to the C-SN.

For example, the first message may be an SN change required (SN Change Required) message, which includes information elements shown in Table 5.

Step S4402, in response to the C-SN receiving the first message sent by the MN, if the first message contains the first information, the C-SN prepares the LTM based on the first message and sends the LTM configuration to the MN through a second message (e.g., an SN addition request confirmation message).

Step S4403, the MN sends an RRCReconfiguration message including LTM candidate configuration to the terminal.

Step S4404, the MN sends an RRCReconfiguration message including LTM candidate configuration to the terminal.

Step S4405, the terminal sends an RRCReconfigurationComplete message to the MN, and the message includes the message content of an SN RRC reconfiguration complete message.

Step S4406, the MN sends a ninth message to the S-SN.

In some embodiments, after the MN receives the SN addition request acknowledge message replied by the C-SN, the MN sends the ninth message, such as an SN Change Confirm message, to the S-SN to inform the S-SN of the LTM candidate cell configured by the C-SN.

For example, the SN Change Confirm message includes one or more T-SNs for which LTM configuration is prepared and a corresponding SCG LTM candidate cell list.

For example, the ninth message may be the SN change acknowledge (e.g., SN Change Confirm) message, which includes information elements shown in Table 10, for example.

Steps S4407 to S4410 are similar to the above steps S4305 to S4307 and are not repeated here.

Scenario 3, LTM for MCG with/without SCG change.

In a case where the network side configures both MCG LTM and SCG LTM for the terminal, the above LTM indication information may be used to instruct the network to request to configure LTM for the inter node for the terminal to trigger changes of MCG and SCG.

The specific implementation process is similar to the above embodiments and is not be repeated here.

Embodiments of the disclosure also provide an apparatus for implementing any one of the above methods. For example, an apparatus is provided, the apparatus includes units or modules for performing the steps executed by respective nodes (e.g., the first node, the second node, the third node) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 5A is a schematic diagram illustrating a structure of a first node according to an embodiment of the disclosure. As illustrated in FIG. 5A, the first node 5100 may include a transceiver module 5101.

In some embodiments, the transceiver module 5101 is configured to send a first message to a second node, in which the first message includes first information, and the first information is configured to request an LTM.

In some examples, the transceiver module 5101 may be configured to perform at least one of communication steps related to transmission and/or reception (e.g., step S2101, step S2102, step S2105, step S2106, step S2107, step S2108, step S2109, step S2110, step S2111, step S2112, but is not limited thereto) performed by the first node 5100 in any of the above methods, which is not repeated herein.

FIG. 5B is a schematic diagram illustrating a structure of a second node according to an embodiment of the disclosure. As illustrated in FIG. 5B, the second node 5200 may include a transceiver module 5201.

In some embodiments, the transceiver module 5201 is configured to receive a first message sent by a first node, in which the first message includes first information, and the first information is configured to request an LTM.

In some examples, the transceiver module 5201 may be configured to perform at least one of communication steps related to transmission and/or reception (e.g., step S2102, step S2105, step S2106, step S2107, step S2108, step S2109, step S2110, but is not limited thereto) performed by the second node 5200 in any of the above methods, which is not repeated herein.

In some embodiments, the above second node 5200 may include a processing module 5202 (not illustrated in FIG. 5B).

In some examples, the processing module 5202 may be configured to perform at least one of other steps (e.g., step S2103, step S2104, but is not limited thereto) performed by the second node 5200 in any of the above methods.

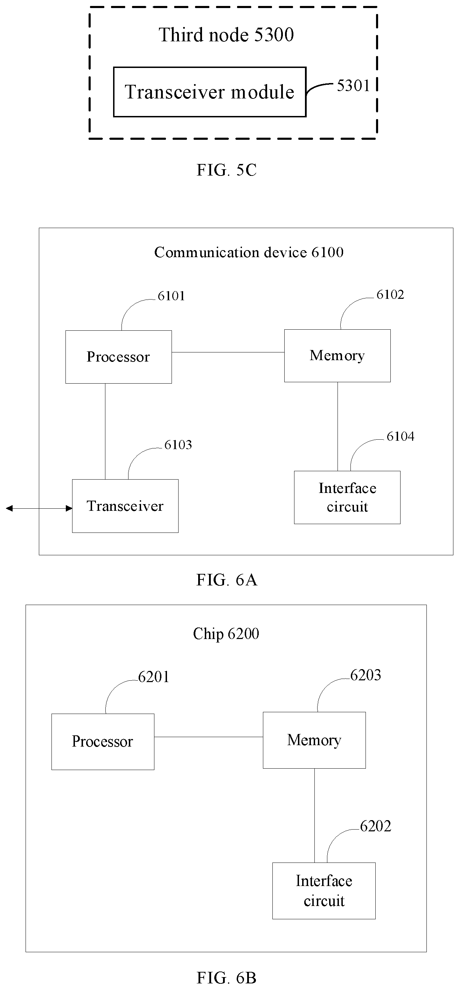

FIG. 5C is a schematic diagram illustrating a structure of a third node according to an embodiment of the disclosure. As illustrated in FIG. 5C, the third node 5300 may include a transceiver module 5301.

In some embodiments, the transceiver module 5301 is configured to send a first message to a first node to cause the first node to send the first message to a second node, in which the first message includes first information, and the first information is configured to request an LTM.

In some examples, the transceiver module 5301 may be configured to perform at least one of communication steps related to transmission and/or reception (e.g., step S2101, step S2111, step S2112, but is not limited thereto) performed by the third node 5300 in any of the above methods, which is not repeated herein.

In some embodiments, the transceiver module may include a sending module and/or a receiving module, and the sending module and the receiving module may be separate or integrated. In an example, the term "transceiver module" may be interchangeable with "transceiver".

In some embodiments, the processing module may be a single module or may include a plurality of submodules. In an example, the plurality of submodules may respectively execute all or part of steps required to be executed by the processing module. In an example, the term "processing module" may be interchangeable with "processor".

FIG. 6A is a schematic diagram illustrating a structure of a communication device 6100 according to an embodiment of the disclosure. The communication device 6100 may be a network device (such as a first node, a second node, a third node, etc.), or a chip, a chip system, a processor, etc. that supports the network device to implement any one of the methods, or a chip, a chip system, a processor, etc. that supports the terminal to implement any one of the methods. The communication device 6100 may be configured to implement the method in the above method embodiments. For details, reference may be made to the description in the above method embodiments.

As shown in FIG. 6A, the communication device 6100 may include one or more processors 6101. The processor 6101 may include a general-purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU, or CU, etc.), execute a computer program, and process data of the computer program. The processor 6101 is configured to invoke instructions to enable the communication device 6100 to execute any of the above communication methods.

In some embodiments, the communication device 6100 further includes one or more transceivers 6102. When the communication device 6100 includes one or more transceivers 6102, the transceiver 6102 performs at least one of the communication steps such as sending and/or receiving in the above method (such as, step S2101, step S2102, step S2105, step S2106, step S2107, step S2108, step S2109, step S2110, step S2111, step S2112, but is not limited thereto), and the processor 6101 performs at least one of other steps (such as, step S2103, step S2104, but is not limited thereto). In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 6100 may also include one or more memories 6103 for storing instructions. Optionally, all or some of the memories 6103 may also be located outside the communication device 6100. In some embodiments, the communication device 6100 further includes one or more interface circuits 6104. The interface circuit 6104 is connected to the memory 6102. The interface circuit 6104 may be configured to receive signals from the memory 6102 or other devices, and may be configured to send the signals to the memory 6102 or other devices. For example, the interface circuit 6104 may read instructions stored in the memory 6102 and send the instructions to the processor 6101.

The communication device 6100 described in the above embodiments may be a network device, but the scope of the communication device 6100 described in the disclosure is not limited, and a structure of the communication device 6100 may not be limited by FIG. 6A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 6B is a schematic diagram illustrating a structure of a chip 6200 provided in an embodiment of the present disclosure. In a case where the communication device 6100 may be a chip or a chip system, reference may be made to the schematic diagram of the structure of the chip 6200 shown in FIG. 6B, but the present disclosure is not limited thereto.

The chip 6200 includes one or more processors 6201, and the chip 6200 is configured to perform any of the above methods.

In some embodiments, the chip 6200 further includes one or more interface circuits 6202. Optionally, the terms such as interface circuit, interface, transceiver pin, transceiver, etc. may be replaced with each other. In some embodiments, the chip 6200 further includes one or more memories 6203 for storing data. Optionally, all or part of the memories 6203 may be outside the chip 6200. Optionally, the one or more interface circuits 6202 are connected to the one or more memories 6203, the one or more interface circuits 6202 may be used to receive data from the one or more memories 6203 or other devices, and the one or more interface circuits 6202 may be used to send data to the one or more memories 6203 or other devices. For example, the one or more interface circuits 6202 may read the data stored in the one or more memories 6203 and send the data to the processor 6201.

In some embodiments, the one or more interface circuits 6202 perform at least one of the communication steps such as sending and/or receiving in the above method (such as, step S2101, step S2102, step S2105, step S2106, step S2107, step S2108, step S2109, step S2110, step S2111, step S2112, but is not limited thereto). The one or more interface circuits 6202 performing the communication steps such as sending and/or receiving (e.g., step S2101, step S2102, step S2105, step S2106, step S2107, step S2108, step S2109, step S2110, step S2111, step S2112) in the above method, for example, means that the one or more interface circuits 6202 perform data exchange between the processor 6201, the chip 6200, the memory 6203, or the transceiver. In some embodiments, the processor 6101 performs at least one of other steps (such as, step S2103, step S2104, but is not limited thereto).

Respective modules and/or elements described in various embodiments, such as virtual devices, physical devices, and chips, may be arbitrarily combined or separated according to circumstances. Optionally, some or all of the steps may also be performed collaboratively by a plurality of modules and/or elements, which is not limited here.

The disclosure also provides a storage medium for storing instructions. When the instructions are running on the communication device 6100, the communication device 6100 is caused to implement any one of the above methods. In an example, the above storage medium is an electronic storage medium. In an example, the above storage medium is a computer-readable storage medium, which is not limited herein. The above storage medium may also be a storage medium readable by other devices. In an example, the above storage medium may be a non-transitory storage medium, which is not limited to herein. The above storage medium may also be a transitory storage medium.

The disclosure also provides a program product. When the program product is executed by the communication device 6100, the communication device 6100 is caused to implement any one of the above methods. In an example, the above program product is a computer program product.

The disclosure also provides a computer program. When the computer program is running on a computer, the computer is caused to implement any one of the above methods.

Other implementations of the disclosure will be apparent to the skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

## Claims

1. An information transmission method, performed by a first node, comprising:
sending a first message to a second node, wherein the first message comprises first information, and the first information is configured to request a Layer 1 or Layer 2 triggered mobility (LTM).

2. The method according to claim 1, wherein the first information comprises at least one of:
an LTM candidate cell identifier;
an LTM candidate configuration identifier;
LTM indication information, wherein the LTM indication information is used to request an LTM candidate configuration or an LTM candidate configuration update;
first indication information, wherein the first indication information indicates that the second node is allowed to prepare a Layer 3 mobility configuration for a terminal in a case where the second node does not support configuring an LTM candidate cell;
a maximum number of configurable candidate cells;
a recommended candidate cell list;
an LTM candidate cell identifier list; or
an LTM candidate configuration identifier list.

3. The method according to claim 1 or 2, wherein the first message comprises any one of:
a handover request message;
a secondary node (SN) addition request message;
an SN modification request message;
an SN change request message;
a first Xn message, wherein the first Xn message is configured to request the LTM; or
a first inter-node radio resource control (RRC) message, wherein the first inter-node RRC message is configured to request the LTM.

4. The method according to any one of claims 1 to 3, further comprising:
receiving a second message sent by the second node, wherein the second message comprises at least one of:
an LTM candidate configuration; or
a Layer 3 mobility configuration.

5. The method according to claim 4, wherein the second message comprises any one of:
a handover request acknowledge message;
an SN addition request acknowledge message;
an SN modification request acknowledge message;
an SN change request acknowledge message;
a second Xn message, wherein the second Xn message is configured to confirm a request of the LTM; or
a second inter-node RRC message, wherein the second inter-node RRC message is configured to confirm a request of the LTM.

6. The method according to any one of claims 1 to 5, further comprising:
receiving a third message sent by the second node, wherein the third message is configured to notify the first node that LTM execution is successfully completed.

7. The method according to claim 6, wherein in a case where the third message comprises LTM indication information, the third message indicates a change of a serving node of a terminal is triggered by the LTM.

8. The method according to claim 6 or 7, wherein the third message comprises any one of:
a handover success message;
an SN addition success message;
an SN modification success message;
an SN change success message;
a third Xn message, wherein the third Xn message indicates that LTM execution is successfully completed; or
a third inter-node RRC message, wherein the third inter-node RRC message indicates that LTM execution is successfully completed.

9. The method according to any one of claims 1 to 8, further comprising:
sending a fourth message to the second node, wherein the fourth message is configured to cancel an LTM candidate configuration prepared by the second node for a terminal.

10. The method according to claim 9, wherein the fourth message comprises at least one of:
an LTM candidate cell identifier;
an LTM candidate configuration identifier;
an LTM candidate cell identifier list; or
an LTM candidate configuration identifier list.

11. The method according to any one of claims 1 to 8, further comprising:
receiving a fifth message sent by the second node after the second node prepares an LTM candidate configuration for a terminal, wherein the fifth message is configured to cancel the LTM candidate configuration prepared by the second node for the terminal.

12. The method according to claim 11, wherein the fifth message comprises at least one of:
an LTM candidate cell identifier;
an LTM candidate configuration identifier;
an LTM candidate cell identifier list; or
an LTM candidate configuration identifier list.

13. The method according to any one of claims 1 to 12, further comprising:
sending a sixth message to the second node, wherein the sixth message is configured to request to modify an LTM candidate configuration prepared by the second node for a terminal.

14. The method according to claim 13, wherein the sixth message comprises at least one of:
LTM indication information;
an LTM candidate cell identifier;
an LTM candidate configuration identifier;
an LTM candidate cell identifier list; or
an LTM candidate configuration identifier list.

15. The method according to any one of claims 1 to 14, further comprising:
receiving a seventh message sent by the second node, wherein the seventh message is configured to request the first node to initiate modification of an LTM candidate configuration.

16. The method according to claim 15, wherein the seventh message comprises at least one of:
LTM indication information;
an LTM candidate cell identifier;
an LTM candidate configuration identifier;
an LTM candidate cell identifier list; or
an LTM candidate configuration identifier list.

17. The method according to any one of claims 1 to 16, further comprising:
sending an eighth message to a third node after receiving the third message sent by the second node, wherein the third message indicates that the terminal successfully accesses the second node, and the eighth message is configured to release a resource of the third node.

18. The method according to any one of claims 1 to 17, further comprising:
receiving the first message sent by a third node.

19. The method according to claim 18, further comprising:
sending a ninth message to a third node after receiving a second message sent by the second node, wherein the second message comprises an LTM candidate configuration, and the ninth message comprises at least one of:
an identifier of the second node that prepares the LTM candidate configuration for a terminal;
a secondary cell group (SCG) LTM candidate cell identifier; or
an SCG LTM candidate cell configuration identifier.

20. An information transmission method, performed by a second node, comprising:
receiving a first message sent by a first node, wherein the first message comprises first information, and the first information is configured to request a Layer 1 or Layer 2 triggered mobility (LTM).

21. The method according to claim 20, wherein the first information comprises at least one of:
an LTM candidate cell identifier;
an LTM candidate configuration identifier;
LTM indication information, wherein the LTM indication information is used to request an LTM candidate configuration or an LTM candidate configuration update;
first indication information, wherein the first indication information indicates that the second node is allowed to prepare a Layer 3 mobility configuration for a terminal in a case where the second node does not support configuring an LTM candidate cell;
a maximum number of configurable candidate cells;
a recommended candidate cell list;
an LTM candidate cell identifier list; or
an LTM candidate configuration identifier list.

22. The method according to claim 20 or 21, wherein the first message comprises any one of:
a handover request message;
a secondary node (SN) addition request message;
an SN modification request message;
an SN change request message;
a first Xn message, wherein the first Xn message is configured to request the LTM; or
a first inter-node radio resource control (RRC) message, wherein the first inter-node RRC message is configured to request the LTM.

23. The method according to any one of claims 20 to 22, further comprising:
preparing an LTM candidate configuration for a terminal based on the first message.

24. The method according to any one of claims 20 to 22, further comprising:
preparing for a terminal a Layer 3 mobility configuration corresponding to an LTM candidate cell, in a case where an LTM candidate configuration cannot be prepared for the terminal, and the first message comprises second indication information, wherein the second indication information is configured to request the Layer 3 mobility configuration; or
preparing for a terminal a Layer 3 mobility configuration corresponding to an LTM candidate cell, in a case where an LTM candidate configuration cannot be prepared for the terminal, and the first message comprises first indication information, wherein the first indication information indicates that the second node is allowed to prepare a Layer 3 mobility configuration for a terminal in a case where the second node does not support configuring an LTM candidate cell.

25. The method according to any one of claims 20 to 22, further comprising any one of:
preparing an LTM candidate configuration for a terminal, and, in a case where an LTM candidate configuration cannot be prepared for the terminal, preparing a Layer 3 mobility configuration for the terminal, wherein the first message comprises first indication information and second indication information, the first indication information indicates that the second node is allowed to prepare the Layer 3 mobility configuration for the terminal in a case where the second node does not support configuring an LTM candidate cell, and the second indication information is configured to request the Layer 3 mobility configuration; or
preparing an LTM candidate configuration and/or a Layer 3 mobility configuration for a terminal, wherein the first message comprises first indication information and second indication information, the first indication information indicates that the second node is allowed to prepare the Layer 3 mobility configuration for the terminal in a case where the second node does not support configuring an LTM candidate cell, and the second indication information is configured to request the Layer 3 mobility configuration.

26. The method according to any one of claims 23 to 25, further comprising:
sending a second message to the first node, wherein the second message comprises at least one of:
the LTM candidate configuration; or
a Layer 3 mobility configuration.

27. The method according to claim 26, wherein the second message comprises any one of:
a handover request acknowledge message;
an SN addition request acknowledge message;
an SN modification request acknowledge message;
an SN change request acknowledge message;
a second Xn message, wherein the second Xn message is configured to confirm a request of the LTM; or
a second inter-node RRC message, wherein the second inter-node RRC message is configured to confirm a request of the LTM.

28. The method according to any one of claims 20 to 27, further comprising:
sending a third message to the first node, wherein the third message is configured to notify the first node that LTM execution is successfully completed.

29. The method according to claim 28, wherein in a case where the third message comprises LTM indication information, the third message indicates a change of a serving node of a terminal is triggered by the LTM.

30. The method according to claim 28 or 29, wherein the third message comprises any one of:
a handover success message;
an SN addition success message;
an SN modification success message;
an SN change success message;
a third Xn message, wherein the third Xn message indicates that LTM execution is successfully completed; or
a third inter-node RRC message, wherein the third inter-node RRC message indicates that LTM execution is successfully completed.

31. The method according to any one of claims 20 to 30, further comprising:
receiving a fourth message sent by the first node, wherein the fourth message is configured to cancel an LTM candidate configuration prepared by the second node for a terminal; and
cancelling the LTM candidate configuration prepared for the terminal based on the fourth message.

32. The method according to claim 31, wherein the fourth message comprises at least one of:
an LTM candidate cell identifier;
an LTM candidate configuration identifier;
an LTM candidate cell identifier list; or
an LTM candidate configuration identifier list.

33. The method according to any one of claims 20 to 30, further comprising:
sending a fifth message to the first node after preparing the LTM candidate configuration for the terminal, wherein the fifth message is configured to cancel the LTM candidate configuration prepared by the second node for the terminal.

34. The method according to claim 33, wherein the fifth message comprises at least one of:
an LTM candidate cell identifier;
an LTM candidate configuration identifier;
an LTM candidate cell identifier list; or
an LTM candidate configuration identifier list.

35. The method according to any one of claims 20 to 34, further comprising:
receiving a sixth message sent by the first node, wherein the sixth message is configured to request to modify an LTM candidate configuration prepared by the second node for a terminal; and
modifying the LTM candidate configuration prepared for the terminal based on the sixth message.

36. The method according to claim 35, wherein the sixth message comprises at least one of:
LTM indication information;
an LTM candidate cell identifier;
an LTM candidate configuration identifier;
an LTM candidate cell identifier list; or
an LTM candidate configuration identifier list.

37. The method according to any one of claims 20 to 36, further comprising:
sending a seventh message the first node, wherein the seventh message is configured to request the first node to initiate modification of an LTM candidate configuration.

38. The method according to claim 37, wherein the seventh message comprises at least one of:
LTM indication information;
an LTM candidate cell identifier;
an LTM candidate configuration identifier;
an LTM candidate cell identifier list; or
an LTM candidate configuration identifier list.

39. An information transmission method, performed by a third node, comprising:
sending a first message to a first node to cause the first node to send the first message to a second node, wherein the first message comprises first information, and the first information is configured to request a Layer 1 or Layer 2 triggered mobility (LTM).

40. The method according to claim 39, wherein the first information comprises at least one of:
an LTM candidate cell identifier;
an LTM candidate configuration identifier;
LTM indication information, wherein the LTM indication information is used to request an LTM candidate configuration or an LTM candidate configuration update;
first indication information, wherein the first indication information indicates that the second node is allowed to prepare a Layer 3 mobility configuration for a terminal in a case where the second node does not support configuring an LTM candidate cell;
a maximum number of configurable candidate cells;
a recommended candidate cell list;
an LTM candidate cell identifier list; or
an LTM candidate configuration identifier list.

41. The method according to claim 39 or 40, wherein the first message comprises any one of:
a handover request message;
a secondary node (SN) addition request message;
an SN modification request message;
an SN change request message;
a first Xn message, wherein the first Xn message is configured to request the LTM; or
a first inter-node radio resource control (RRC) message, wherein the first inter-node RRC message is configured to request the LTM.

42. The method according to any one of claims 39 to 41, further comprising:
receiving an eighth message sent by the first node, wherein the eighth message is configured to release a resource of the third node; and
releasing the resource based on the eighth message.

43. The method according to any one of claims 39 to 42, further comprising:
receiving a ninth message sent by the first node, wherein the ninth message comprises at least one of:
an identifier of the second node that prepares the LTM candidate configuration for a terminal;
a secondary cell group (SCG) LTM candidate cell identifier; or
an SCG LTM candidate cell configuration identifier.

44. A first node, comprising:
a transceiver module, configured to send a first message to a second node, wherein the first message comprises first information, and the first information is configured to request a Layer 1 or Layer 2 triggered mobility (LTM).

45. A second node, comprising:
a transceiver module, configured to receive a first message sent by a first node, wherein the first message comprises first information, and the first information is configured to request a Layer 1 or Layer 2 triggered mobility (LTM).

46. A third node, comprising:
a transceiver module, configured to send a first message to a first node to cause the first node to send the first message to a second node, wherein the first message comprises first information, and the first information is configured to request a Layer 1 or Layer 2 triggered mobility (LTM).

47. A first node, comprising:
one or more processors;
wherein the processor is configured to perform the information transmission method according to any one of claims 1 to 19.

48. A second node, comprising:
one or more processors;
wherein the processor is configured to perform the information transmission method according to any one of claims 20 to 38.

49. A third node, comprising:
one or more processors;
wherein the processor is configured to perform the information transmission method according to any one of claims 39 to 43.

50. A communication system, comprising a first node, a second node, and a third node, wherein the first node is configured to implement the information transmission method according to any one of claims 1 to 19, the second node is configured to implement the information transmission method according to any one of claims 20 to 38, and the third node is configured to implement the information transmission method according to any one of claims 39 to 43.

51. A storage medium storing instructions that, when executed on a communication device, cause the communication device to perform the information transmission method according to any one of claims 1 to 19, 20 to 38 or 39 to 43.
